# EUROPÄISCHE PATENTSCHRIFT

(11) **EP 2 228 256 B1**
(45) Veröffentlichungstag und Bekanntmachung des Hinweises auf die Patenterteilung: **11.11.2015**
(21) Anmeldenummer: 10156386.4
(22) Anmeldetag: 12.03.2010
(51) Int. Cl.: B60P 3/04

(54) **Tiertransporter**
Animal transporter
Transporteur d'animaux

(30) Priorität: 13.03.2009 DE 202009004015 U
(43) Veröffentlichungstag der Anmeldung: 15.09.2010
(73) Patentinhaber: Böckmann Fahrzeugwerke GmbH, 49688 Lastrup (DE)
(72) Erfinder: Böckmann, Klaus, 49688, Lastrup (DE)
(74) Vertreter: Eisenführ Speiser

(56) Entgegenhaltungen:
- WO-A1-93/13959
- WO-A1-95/19896
- DE-U1- 20 309 373
- DE-U1- 20 313 374
- US-A- 866 811
- US-B1- 6 895 897

## Beschreibung

Die Erfindung betrifft eine Halterung einer Boxenstange für einen Tiertransporter, insbesondere in einem Pferdetransporter. Weiterhin betrifft die Erfindung eine Boxenstange, ein Halterungssystem für eine Boxenstange sowie einen Tiertransporter, insbesondere einen Pferdetransporter.

Boxenstangen für Tiertransporter sind beispielsweise aus der DE 20 2006 010 385 U1 bekannt. Derartige Boxenstangen werden im Allgemeinen quer zur Fahrtrichtung des Tiertransporters, insbesondere des Pferdetransporters, befestigt, um beispielsweise eine Pferdebox zu begrenzen bzw. um zu verhindern, dass ein auf dem Tiertransporter befindliches Tier von dem Tiertransporter herunterklettern kann. Die Boxenstangen dienen dazu, das Tier auf dem Tiertransporter zu halten.

Derartige Boxenstangen können aus einem harten Material, wie beispielsweise einem Metall, bestehen. Es ist wünschenswert, das in einem Tiertransporter zu transportierende Tier, insbesondere Pferd, vor Druckbelastungen und vor Verletzungsgefahren zu schützen. Druckbelastungen entstehen beispielsweise im Brustbereich des Pferdes, wenn dieses gegen eine Boxenstange stößt.

Derartige Boxenstangen werden in der Regel an einer Halterung für die Boxenstange lösbar befestigt. Beispielsweise wird ein Ende einer Boxenstange in eine erste Halterung und das andere Ende einer Boxenstange in eine zweite Halterung gemäß einem Haltemechanismus der Boxenstange befestigt. Die beiden Halterungen sind häufig im Inneren eines Tiertransporters, insbesondere eines Pferdetransporters, angeordnet, und die Boxenstange wird an diesen Halterungen befestigt, um eine Box, beispielsweise eine Pferdebox, zu begrenzen.

Es ist Aufgabe der vorliegenden Erfindung eine Halterung für eine Boxenstange vorzusehen, an der eine Boxenstange auf angenehme Weise befestigt werden kann.

Eine weitere oder alternative Aufgabe ist es, die Flexibilität eines Tiertransporters, insbesondere eines Pferdetransporters, zu erhöhen.

Es ist eine weitere oder alternative Aufgabe der vorliegenden Erfindung, eine Vorrichtung vorzusehen, die ein Tier, insbesondere ein Pferd, beim Transport vor Verletzungen schützt und/oder Druckbelastungen des Tieres mindert.

Somit wird erfindungsgemäß eine Halterung einer an einem Ende eingehängten Boxenstange für einen Tiertransporter, insbesondere einen Pferdetransporter, vorgesehen. Die Halterung weist eine Führung des anderen Endes der Boxenstange auf, deren anderes Ende in die Führung eingreift. Die Führung verbindet einen Anfangsbereich zum Aufnehmen des anderen Endes mit einem Endbereich zum Arretieren des anderen Endes. Zwischen dem Anfangsbereich und dem Endbereich bildet die Führung einen Anschlag zum Verhindern eines ungewollten Herauslösens des anderen Endes aus dem Endbereich.

Somit wird ein einfaches Aufnehmen des anderen Endes einer Boxenstange erreicht und gleichzeitig wird die Boxenstange in ihrer Endposition, d. h. wenn sie sich im Endbereich befindet, gegen ein Rausrutschen bzw. Herauslösen gesichert. Denn durch Vibrationen oder durch ein Schlagen des Tieres gegen die Boxenstange kann das andere Ende der Boxenstange nur gegen den Anschlag springen und nicht über den Anschlag hinweg und aus der Führung heraus.

Die Halterung kann beispielsweise an einem Tiertransporter, insbesondere an einem Pferdetransporteur, befestigt sein. Für die Befestigung der Halterung sind beispielsweise Nieten geeignet. Das andere Ende der Boxenstange ist beispielsweise bolzenförmig ausgebildet. Bei der Führung kann es sich beispielsweise um einer Aussparung in einer Platte, bevorzugt Metallplatte, handeln, die bevorzugt eine schmale, längliche Form aufweist und einen Weg um eine Zunge beschreibt. Bevorzugt bildet die Zunge dann den Anschlag. Der Anfangsbereich bzw. Eingangsbereich der Führung dient der Aufnahmen des anderen Endes, beispielsweise des bolzenförmigen Endes einer Boxenstange und zum Führen hin zu einem Endbereich. Der Endbereich der Führung definiert dann den Endsitz bzw. die Endposition des anderen Endes der Boxenstange. Das andere Ende der Boxenstange kann beispielsweise als ein Stift oder ein Bolzen ausgebildet sein.

Die Ausbildung des Anschlags zwischen dem Anfangsbereich und dem Endbereich der Führung kann beispielsweise bedeuten, dass der Anschlag auf oder an dem Weg, den die Führung beschreibt, ausgebildet ist. Beispielsweise kann als Anschlag ein Abschnitt einer Wandung, die die Führung zumindest teilweise definiert verwendet werden.

Gemäß einer Weiterbildung der Erfindung weist die Halterung eine Mehrzahl von den Führungen auf, bevorzugt drei Führungen, die nebeneinander in einer ersten Ebene angeordnet sind. In einer weiteren Weiterbildung der Erfindung weist die Halterung eine Mehrzahl von den Führungen auf, bevorzugt drei Führungen, die übereinander angeordnet sind.

Ein Anordnen der Mehrzahl von Führungen nebeneinander bedeutet auch, dass die Endbereiche der Führungen nebeneinander angeordnet, was zu verschiedenen Endpositionen des anderen Endes einer Boxenstange führt, wenn diese in eine andere benachbarte Führung eingesetzt wird. Die Größe einer mit einer derartigen Boxenstange begrenzten Box kann somit verändert werden. Insbesondere drei unterschiedliche Boxengrößen sind für Pferdetransporter gut geeignet. Abhängig von der Positionierung der erfindungsgemäßen Halterung mit der Mehrzahl von Führungen kann eine gewünschte Größenveränderlichkeit der Box bestimmt werden. Die Box ist beispielsweise nur in der Höhe verstellbar, wenn die Endbereiche der Führungen senkrecht übereinander an einem Tiertransporter angeordnet sind. Die Box ist beispielsweise nur in der Länge verstellbar, wenn die Endbereiche der Führungen horizontal nebeneinander an einem Tiertransporter angeordnet sind. Bevorzugt wird die Halterung mit einer Mehrzahl von Führungen derart an einem Tiertransporter angeordnet, dass Boxen unterschiedlicher Höhe und Länge gebildet werden können. Dazu sind beispielsweise die Endbereiche der Führungen der Halterung an einer innenliegenden Seitenwand des Tiertransporters an unterschiedlichen Höhen vom Boden aus und in einer horizontalen Richtung nebeneinander angeordnet.

Gemäß einem weiteren Aspekt der Erfindung ist die Führung zumindest teilweise bogenförmig ausgebildet. Eine bogenförmige Ausbildung der Führung führt zu einem einfachen Gleiten des anderen Endes einer Boxenstange durch die Führung. Ein ungewolltes Verhaken des anderen Endes in der Führung wird so vermieden oder zumindest verringert.

Gemäß einem weiteren Aspekt der Erfindung weist die Halterung eine erste Ebene, in der die wenigstens eine Führung angeordnet ist und eine zweite Ebene, in der Befestigungsmittel zum Befestigen der Halterung, beispielsweise an einem Tiertransporter, insbesondere an einem Pferdetransporter, angeordnet sind, wobei die erste Ebene und die zweite Ebene parallel und voneinander beabstandet sind.

Die zweite Ebene weist beispielsweise Bohrungen auf, mit der die Halterung beispielsweise an der Innenseite eines Tiertransporters befestigt werden kann. Hierfür sind beispielsweise Nieten oder Schrauben geeignet. Die zweite Ebene mit der wenigstens einen Führung ist von dieser Befestigungsebene abgesetzt, so dass sich zwischen der Wand eines Tiertransporters und der ersten Ebene ein Hohlraum bilden kann. Somit kann ein Teil des anderen Endes einer Boxenstange bzw. ein Teil eines Bolzens von diesem Hohlraum bzw. in den Raum zwischen der ersten Ebene und der zweiten Ebene aufgenommen werden.

Die Aufgabe wird auch gelöst mit einer Boxenstange zur Verwendung in einem Tiertransporter, insbesondere Pferdetransporter. Die Boxenstange weist ein Ende zum Einhängen an einem Tiertransporter und das anderes Ende zum Einführen in eine Führung einer erfindungsgemäßen Halterung auf.

Das Einhängen stellt auch ein lösbares Befestigen dar. Das eine Ende der Boxenstange weist bevorzugt eine U-förmige Gestalt auf, wobei das U ungleichlange Schenkel besitzt. Dieses U-förmige Ende kann beispielsweise zum Befestigen durch einen Ring an einen Tiertransporter gesteckt werden.

Gemäß einer Weiterbildung der Erfindung ist das andere Ende ausgebildet, Bewegungen des anderen Endes entlang der Führung zu erlauben und Bewegungen des anderen Endes in Längsrichtung der Boxenstange zu verhindern. Somit wird die Position der Boxenstange besser definiert und ein ungewolltes Verrutschen wird verhindert. Dies wird beispielsweise dadurch erreicht, dass an dem anderen Ende der Boxenstange ein Abschnitt einen kleineren Querschnitt als die benachbarten Abschnitte aufweist, beziehungsweise dadurch, dass das andere Ende eine Verjüngung aufweist.

Die Aufgabe wird auch gelöst mit einem Halterungssystem für eine Boxenstange zur Verwendung in einem Tiertransporter, insbesondere in einem Pferdetransporter. Das Halterungssystem weist eine erfindungsgemäße Halterung und eine zweite Halterung zum Aufnehmen des einen Endes der Boxenstange auf, wobei das Halterungssystem geeignet ist, ein Lösen des anderen Endes der Boxenstange von der zweiten Halterung nur bei einem gelösten anderen Ende zu ermöglichen.

Befindet sich das eine Ende der Boxenstange in der zweiten Halterung und das andere Ende in der ersten Halterung, so kann das eine Ende der Boxenstange nicht aus der zweiten Halterung gelöst werden. Zunächst muss das andere Ende aus der Führung der ersten Halterung geschoben werden, damit eine entsprechende Bewegung der Boxenstange möglich ist, um diese auch von der zweiten Halterung zu lösen. Somit ist der sichere Halt einer Boxenstange verbessert. Die zweite Halterung liegt im Allgemeinen der ersten Halterung gegenüber. Wenn die erste Halterung mehrere Führungen aufweist, so weist die zweite Halterung ebenfalls mehrere Haltereinrichtungen, beispielsweise Ringe oder Ösen auf, die jeweils der Endposition der entsprechenden Führung gegenüber liegen.

Die Aufgabe wird zudem gelöst durch ein Halterungssystem mit einer erfindungsgemäßen Halterung für eine Boxenstange eines Tiertransporters, insbesondere eines Pferdetransporters, und mindestens einem Befestigungsmittel zur Befestigung der Halterung an einer ersten Fläche einer Wand des Tiertransporters, wobei das Halterungssystem so angepasst ist, dass, wenn die Halterung an der ersten Fläche der Wand befestigt ist, durch Betätigen des Befestigungsmittels an einer zweiten Fläche der Wand, die der ersten Fläche gegenüberliegt, die Halterung von der ersten Fläche der Wand zumindest teilweise, insbesondere vollständig, gelöst werden kann. Die Wand des Tiertransporters ist bevorzugt eine seitliche Außenwand des Tiertransporters und/oder eine innere Wand des Tiertransporters, insbesondere eine innere Trennwand des Tiertransporters, die zwei Bereiche des Innenraums des Tiertransporters voneinander trennt, um beispielsweise zwei Pferde in dem Tiertransporter voneinander getrennt zu befördern. Wenn die Wand des Tiertransporters eine Außenwand ist, ist die erste Fläche der Außenwand bevorzugt die Innenfläche der Außenwand und die zweite Fläche der Außenwand ist bevorzugt die Außenfläche der Außenwand. In einer bevorzugten Ausführungsform kann daher die Halterung für die Boxenstange von der Innenwand derart gelöst werden, dass die Halterung innerhalb des Tiertransporters auf den Boden fällt, indem das Befestigungsmittel außerhalb des Tiertransporters an der Außenfläche der Außenwand des Tiertransporters gelöst wird.

Das mindestens eine Befestigungsmittel weist bevorzugt eine Schraube auf, insbesondere eine Ringschraube. Eine Ringschraube kann leicht gedreht werden, indem beispielsweise ein Stiel, wie ein Besenstiel, durch die Ringschraube geführt und dann die Ringschraube mittels des Stieles gedreht wird. Dies ermöglicht ein schnelles Lösen des Befestigungsmittels, selbst wenn die Halterung fest verschraubt ist.

Es ist bevorzugt, dass das Halterungssystem eine an der ersten Fläche der Wand befestigbare Aufnahme zum Aufnehmen eines ersten Endes der Halterung als erstes Befestigungsmittel und ein zweites Befestigungsmittel zum Befestigen eines zweiten Endes der Halterung aufweist, wobei, wenn die Halterung an der ersten Fläche der Wand befestigt ist, das zweite Befestigungsmittel an der zweiten Fläche lösbar ist, so dass die Halterung aus der Aufnahme entfernt werden kann, um die Halterung von der ersten Fläche der Wand zu lösen. Das zweite Befestigungsmittel ist bevorzugt eine Schraube, insbesondere eine Ringschraube. Durch Lösen des zweiten Befestigungsmittels kann die Halterung schnell und leicht von der Wand entfernt werden. Es ist also lediglich notwendig, das zweite Befestigungsmittel, insbesondere die Schraube, zu lösen, um die Halterung von der Wand zu entfernen. Wie oben bereits erwähnt, ist die erste Fläche beispielsweise eine Innenfläche einer Außenwand eines Tiertransporters und die zweite Fläche ist die Außenfläche dieser Seitenwand. Insbesondere in Notfallsituationen kann damit auf schnelle und einfache Art und Weise und ohne das Innere des Tiertransporters betreten zu müssen, die Halterung von der Innenfläche der Wand gelöst werden.

Die Aufnahme weist bevorzugt einen Anbindering auf. Dies ermöglicht es, Tiere, insbesondere Pferde, an der Aufnahme anzubinden. Die Aufnahme erfüllt damit zumindest zwei Funktionen, zum einen das Aufnehmen und Halten der Halterung und zum anderen das Halten eines Tieres, wenn es mittels des Anbinderings an der Aufnahme angebunden worden ist.

Die Aufgabe wird auch gelöst mit einem Tiertransporter, insbesondere Pferdetransporter, mit einer erfindungsgemäßen Halterung bzw. mit einem erfindungsgemäßen Halterungssystem.

Die Aufgabe wird ebenfalls gelöst mit einem Tiertransporter, insbesondere Pferdetransporter, mit einer erfindungsgemäßen Halterung, die an dem Tiertransporter derart angeordnet ist, dass benachbarte Endbereiche unterschiedlich hoch liegen. Die Höhe bezeichnet hier den Abstand von dem Boden, auf dem der Transporter steht, oder von einer Bodenplatte des Transporters bis zu dem entsprechenden Endbereich einer Führung.

Die Aufgabe wird ebenfalls gelöst mit einem Tiertransporter, insbesondere Pferdetransporter, mit einer erfindungsgemäßen Boxenstange.

Eine nachrüstbare Polsterung zur Polsterung einer Boxenstange zur Verwendung in einem Tiertransporter, insbesondere in einem Pferdetransporter, kann vorgesehen sein. Die nachrüstbare Polsterung weist eine röhrenförmige Gestalt auf und ist ausgebildet, die Boxenstange aufzunehmen und sich rutschfest mit der Boxenstange zu verbinden.

Somit kann die Polsterung von nicht gepolsterten Boxenstangen als auch von gepolsterten Boxenstangen verbessert werden. Die Polsterung weist eine röhrenförmige Gestalt auf, was bedeutet, dass die Polsterung ein durchgehendes Loch aufweist, durch das die Boxenstange geschoben werden kann. Nachdem die Polsterung auf die Boxenstange geschoben ist, ist diese rutschfest mit der Boxenstange verbunden. Insbesondere die Nachrüstbarkeit ermöglicht eine nachträgliche Verbesserung der Polsterung, was auch bedeutet, dass an Boxenstangen bereits vorhandene Polsterungen mit der erfindungsgemäßen nachrüstbaren Polsterung nachträglich verbessert werden können, d. h. die Polstereigenschaft wird erhöht. Ebenso kann abhängig von dem zu transportierenden Tier, beispielsweise auch in Abhängigkeit der Größe des Tieres, eine geeignete nachrüstbare Polsterung gewählt werden. Denn einerseits wird durch die nachrüstbare Polsterung die Polsterwirkung verbessert, andererseits wird aber auch die Größe der Box, in der sich ein Tier befindet, durch eine Boxenstange mit der nachrüstbaren Polsterung verändert und somit an die Größe des entsprechenden Tieres angepasst.

Die rutschfeste Verbindung zwischen der nachrüstbaren Polsterung und der Boxenstange bedeutet, dass, nachdem die Polsterung auf die Boxenstange gezogen ist, ein Verrutschen in Längsrichtung der Stange als auch radial um die Stange bei normaler Beanspruchung der Polsterung nicht mehr möglich ist. Jedoch bleibt bei erhöhter Krafteinwirkung ein Abziehen der Polsterung von der Boxenstange möglich.

In einer Weiterbildung weist die nachrüstbare Polsterung dehnbares Material auf bzw. besteht aus dehnbarem Material. Insbesondere dehnbares Material ist gut dafür geeignet, die rutschfeste Verbindung zwischen der Polsterung und der Boxenstange zu erzeugen, denn, wenn das Loch in der Polsterung einen kleineren Durchmesser hat als die Boxenstange wird sich die nachrüstbare Polsterung beim Aufziehen auf die Boxenstange dehnen und sich so an die Boxenstange anpressen können. Damit wird ein Verrutschen der Polsterung gegenüber der Stange in Längsrichtung oder in radialer Richtung erschwert oder verhindert.

Dehnbares Material ist insbesondere auch dafür geeignet, um sich gut an die äußere Struktur einer Boxenstange anpassen zu können. Diese kann zwar glatt sein, jedoch kann beispielsweise auch eine gewellte oder rillenförmige Struktur vorliegen. Gemäß einer Weiterbildung der Erfindung weist die Innenseite der nachrüstbaren Polsterung rutschfestes Material auf. Die Innenseite bezeichnet die Innenseite des Loches, das sich durch die nachrüstbare Polsterung erstreckt. Ein rutschfestes Material kann beispielsweise ein gummiartiges Material sein, wenn die Boxenstange an der Oberseite, also an der Kontaktfläche, ein metallartiges Material aufweist. Die Materialwahl an der Innenseite der Polsterung ist also entsprechend auf das Material der Außenseite der Boxenstange abzustimmen. Insbesondere kann auch ein selbstklebendes Material an der Innenseite der Polsterung verwendet werden, so dass eine nicht nur rutschfeste, sondern feste Verbindung, d. h. nicht wiederlösbare Verbindung, mit der Boxenstange eingegangen werden kann.

Einerseits kann die Polsterung vollständig aus dem rutschfesten Material bestehen, andererseits aber kann die Polsterung an der Innenseite auch mit einem entsprechenden Material beschichtet sein. Die Wahl der entsprechenden Ausgestaltung der Polsterung hängt von der gewünschten Rutschfestigkeit zwischen der nachrüstbaren Polsterung und der nachzurüstenden Boxenstange ab.

Gemäß einer Weiterbildung der Erfindung weist die nachrüstbare Polsterung einen weichelastischen Schaum auf. Bevorzugt besteht die nachrüstbare Polsterung aus einem weichelastischen Schaum.

Der weichelastische Schaum weist bevorzugt Formteildichten im Bereich von 250 bis 700 kg pro m³ (kg/m³) und Shore A Härten von 25 bis 70 auf.

Bevorzugt weist ein weichelastisches Schaumteil eine Polyol-Komponente und eine Isocyanat-Komponente, beispielsweise im Mischungsverhältnis 100:48 auf. Die Polyol-Komponente stellt dann ein Gemisch aus Polyolen, Aktivatoren, Stabilisatoren und ggf. Farbstoffen dar. Die Isocyanat-Komponente stellt eine Zubereitung aus Diphenylmethandiisocyanat (MDI) dar. Ein aus diesem Schaum bestehendes Schaumteil weist im Allgemeinen im Inneren und an der Haut unterschiedliche Eigenschaften auf. Im Inneren, d. h. am Schaum, sind folgende Wertebereiche bevorzugt: Die Rohdichte liegt zwischen 172 und 430 kg/m³ nach DIN 53420. Die Zugfestigkeit liegt zwischen 48 und 125 N/mm² nach DIN 53571. Die Dehnung beträgt zwischen 110 und 145% nach der Prüfvorschrift DIN 53571. Die Weiterreißfestigkeit liegt im Bereich von 17,1 bis 32 N/mm nach der Prüfvorschrift DIN 53515.

An der Haut, d. h. an der äußeren Schicht eines Schaumteils, die eine Stärke von d=1 mm hat, weist das Schaumteil eine Dichte von bevorzugt 950 bis 970 kg/m³ nach der Prüfvorschrift DIN 53479 auf. Die Zugfestigkeit beträgt bevorzugt 6,5 bis 7,6 N/mm² nach der Prüfvorschrift DIN 53504. Die Dehnung liegt bevorzugt im Bereich von 145 bis 175% nach der Prüfvorschrift DIN 53504. Die Weiterreißfestigkeit liegt bevorzugt im Bereich von 3,5 bis 6 N/mm nach der Prüfvorschrift DIN 53515.

Ein derartiger Schaum ist beispielsweise unter dem Begriff "Dipointegral" der Firma Schaffer erhältlich.

In einer Weiterbildung der Erfindung weist die nachrüstbare Polsterung an der Außenseite der Polsterung eine Schutzhülle auf. Die Schutzhülle kann bevorzugt aus einem sehr weichen, beispielsweise Hand schmeichelndem, Material bestehen. Die Schutzhülle kann einerseits dazu dienen, die äußere Berührung des Polsters noch weicher zu gestalten und auch dazu, den Polsterkern vor Beschädigungen, wie beispielsweise Rissen, zu schützen.

Die Polsterung kann angepasst sein, auf Boxenstangen einer oder unterschiedlicher Art aufgezogen zu werden. Insbesondere kann die Polsterung angepasst sein, nachträglich über bereits bekannte Boxenstangen aufgezogen zu werden. Insbesondere Boxenstangen, die außen einen Zapfen aufweisen, können in einer bevorzugten Ausführungsform der Polsterung mit dieser Polsterung nachträglich versehen werden.

Der Tiertransporter weist bevorzugt eine Öffnung auf, insbesondere eine hinter obere Öffnung, die mittels einer Plane abdeckbar ist.

Beispielsweise ist aus der DE 31 04 374 A1 eine undurchlässige Plane zum Abdecken der hinteren oberen Öffnung eines Tiertransporters bekannt, wobei die Plane aufgerollt sein kann, so dass die Öffnung im Wesentlichen freigegeben wird, oder die Plane heruntergerollt sein kann, so dass die Öffnung durch die Plane bedeckt ist.

Bei dem in der DE 31 04 374 A1 beschriebenen Tiertransporter kann die hintere obere Öffnung also im Wesentlichen nur vollständig durch die Plane abgedeckt sein oder im Wesentlichen vollständig von der Plane freigegeben sein. Es ist nicht möglich, unterschiedliche Bedeckungsgrade der Öffnung bereitzustellen, um insbesondere während der Fahrt innerhalb des Tiertransporters gewünschte Windverhältnisse und Temperaturen einzustellen.

Eine Plane zur Abdeckung einer Öffnung, insbesondere einer hinteren oberen Öffnung, eines Tiertransporters, insbesondere eines Pferdetransporters, kann vorgesehen sein, wobei die Plane einen luftdurchlässigen Netzbereich, einen undurchlässigen Bereich und eine Abdeckplane zum Abdecken des luftdurchlässigen Netzbereichs aufweist.

Da die Plane einen luftdurchlässigen Netzbereich und einen undurchlässigen Bereich aufweist und da die Plane zudem eine Abdeckplane zum Abdecken des luftdurchlässigen Netzbereichs aufweist, können unterschiedliche Windverhältnisse und Temperaturen innerhalb des Tiertransporters, insbesondere während der Fahrt, realisiert werden. Beispielsweise kann die Plane vollständig runtergezogen sein und die Abdeckung kann den luftdurchlässigen Netzbereich bedecken. In diesem Fall ist die Öffnung maximal verschlossen. Zudem könnte die Plane vollständig aufgerollt sein, so dass sie die Öffnung nicht bedeckt. In diesem Fall liegt eine minimale oder nicht vorhandene Abdeckung der Öffnung vor. Zudem kann die Plane vollständig heruntergezogen sein und die Abdeckplane kann den luftdurchlässigen Netzbereich freigeben. In diesem Zustand ist ein mittlerer Öffnungsgrad der Öffnung realisiert, bei der immer noch eine Belüftung des Innenraums des Tiertransporters durch die Öffnung möglich ist, diese aber auf Grund des luftdurchlässigen Netzbereichs reduziert ist. Diese verschiedenen Einstellungsmöglichkeiten ergeben eine größere Variabilität beim Einstellen der Windverhältnisse und Temperaturen, insbesondere während der Fahrt, in dem Tiertransporter.

Bevorzugt ist die Plane ein Planenlift. Ein Planenlift ist insbesondere eine Plane, die automatisch aufrollbar ist, insbesondere mittels Blattfedern. Ein Planenlift wird weiter unten ausführlicher beschrieben.

Insbesondere sind die Abdeckplane und/oder die Plane so angepasst, dass die Abdeckplane zwischen einem ersten Zustand und einem zweiten Zustand veränderbar ist, wobei in dem ersten Zustand ein größerer Teil des Netzbereichs bedeckt ist, insbesondere der Netzbereich vollständig bedeckt ist, und in dem zweiten Zustand ein kleinerer Teil des Netzbereichs bedeckt ist oder der Netzbereich nicht bedeckt ist.

Es ist bevorzugt, dass die Plane und/oder die Abdeckplane ein Haltemittel zum Halten der Abdeckplane in dem ersten Zustand und/oder in dem zweiten Zustand aufweist. Das Haltemittel ist bevorzugt ein Klettverschluss.

Ein Tiertransporter, insbesondere ein Pferdetransporter, mit einer Öffnung, insbesondere einer hinteren oberen Öffnung, kann eine erfindungsgemäße Plane zur Abdeckung der Öffnung aufweisen.

Ein Tiertransporter weist meistens eine Bodenplatte mit in der Regel speziell ausgearbeiteten Öffnungen auf, die eine Stange, insbesondere ein Rohr, einer Trennwand zum Befestigen der Trennwand in dem Tiertransporter aufnehmen können. Dies erfordert eine kostenaufwendige Bearbeitung der Bodenplatte. Zudem lässt sich die Trennwand in der Regel nicht leicht wieder von der Bodenplatte lösen. Es können daher ein Befestigungselement, eine Stange, eine Trennwand und ein Tiertransporter bereitgestellt werden, die es ermöglichen, ohne aufwendige Bearbeitung der Bodenplatte eine Stange, insbesondere eine Stange einer Trennwand und damit die Trennwand selbst, leicht an der Bodenplatte zu befestigen und diese, wenn es gewünscht ist, auch wieder leicht von der Bodenplatte zu lösen.

Beispielsweise kann ein Befestigungselement zum Befestigen einer Stange, insbesondere einer Trennwand, an einem Bodenelement eines Tiertransporters vorgesehen sein, wobei das Befestigungselement einen Bodenverbindungsbereich zum Verbinden des Befestigungselements mit dem Bodenelement und einen Stangenverbindungsbereich zum Verbinden des Befestigungselements mit der Stange aufweist.

Da die Stange nicht direkt mit dem Bodenelement verbunden wird, sondern mittels des Befestigungselements, ist eine spezielle aufwendige Bearbeitung des Bodenelements zum Befestigen der Stange und damit insbesondere einer Trennwand nicht notwendig. Das Befestigungselement kann leicht mit dem Bodenelement verbunden werden, wonach lediglich die Stange, die insbesondere eine Stange einer Trennwand ist, mit dem Stangenverbindungsbereich des Befestigungselements zu verbinden ist. Der Bodenverbindungsbereich kann so angepasst werden, dass eine Verbindung mit dem Bodenelement leicht erzeugt werden kann, wobei unabhängig davon der Stangenverbindungsbereich so ausgebildet sein kann, dass die Stange und damit insbesondere eine Trennwand leicht mit dem Befestigungselement verbunden und auch leicht wieder von dem Befestigungselement gelöst werden können.

Es ist bevorzugt, dass der Bodenverbindungsbereich mindestens zwei Verbindungsöffnungen zum Durchführen von Verbindungsmitteln zum Verbinden des Befestigungselements mit dem Bodenelement aufweist.

Dies ermöglicht das Verbinden des Befestigungselements mit dem Bodenelement mittels einer einfachen Schraubverbindung. Hierzu weist das Bodenelement bevorzugt zwei entsprechende Öffnungen, insbesondere Bohrlöcher auf, um das Befestigungselement mit dem Bodenelement zu verschrauben.

Es ist des Weiteren bevorzugt, dass der Stangenverbindungsbereich eine Verriegelungsöffnung zum Aufnehmen eines Verriegelungselements der Stange zum Herstellen einer Verriegelungsverbindung aufweist.

Dies ermöglicht ein leichtes Verbinden der Stange und damit insbesondere einer Trennwand mit dem Bodenelement und auch ein entsprechendes leichtes Lösen der Stange und damit insbesondere der Trennwand von dem Bodenelement durch Einführen eines Verriegelungselements der Stange in die Verriegelungsöffnung und durch anschließendes Verriegeln bzw. durch Entriegeln und Herausführen des Verriegelungselements der Stange aus der Verriegelungsöffnung.

Die Trennwand kann beispielsweise eine gebogene Stange oder mehrere Stangen aufweisen, die mit dem Bodenelement zu verbinden sind. Zumindest an einer Verbindungsstelle ist eine Stange der Trennwand mittels des Befestigungselements mit dem Bodenelement verbunden. Andere Verbindungsstellen zwischen einer Stange der Trennwand und dem Bodenelement können ebenfalls mittels des Befestigungselements oder auf eine andere Art und Weise mit dem Bodenelement verbunden sein. Wenn es beispielsweise zwei derartige Verbindungsstellen gibt, könnte die erste Verbindungsstelle mittels des Befestigungselements erzeugt werden, indem die Stange der Trennwand, das heißt das Verriegelungselement der Stange, im entriegelten Zustand in die Verriegelungsöffnung des Befestigungselements geführt wird. Dann wird die Trennwand bevorzugt derart gedreht, dass sie in Längsrichtung des Tiertransporters angeordnet ist, wobei durch diese Drehbewegung die Stange mit dem Befestigungselement verriegelt wird. An der zweiten Verbindungsstelle, an der eine Stange der Trennwand mit dem Bodenelement verbunden wird, kann diese Verbindung auf eine andere Art erfolgen, beispielsweise indem die Stange in eine entsprechende Öffnung in dem Bodenelement reingesetzt wird, verschraubt wird etc..

Das Verriegelungselement der Stange kann auch als Sicherungszapfen bezeichnet werden.

Es ist des Weiteren bevorzugt, dass das Befestigungselement eine Bodenseite, die im befestigen Zustand dem Bodenelement zugewandt ist, und eine Stangenseite, die im befestigten Zustand im Wesentlichen der Stange zugewandt ist, aufweist, wobei die Stangenseite abgerundet ist. Durch die Abrundungen kann eine Verletzung von Tieren an dem Befestigungselement verhindert werden.

Zudem ist es bevorzugt, dass das Befestigungselement so ausgebildet ist, dass es im mit dem Bodenelement verbundenen Zustand mit dem Bodenelement einen Hohlraum bildet, in den das Verriegelungselement durch die Verriegelungsöffnung hindurch zum Befestigen der Stange einführbar ist, wobei das Befestigungselement Reinigungsöffnungen aufweist, die ein Reinigen des Hohlraums ermöglichen.

Zudem ist es bevorzugt, dass die Verriegelungsöffnung einen kreisrunden Bereich und einen sich an den kreisrunden Bereich anschließenden im Wesentlichen rechtwinkligen Bereich aufweist, wobei eine Linie von der Mitte des kreisrunden Bereichs zu der Mitte des rechtwinkligen Bereichs einen Winkel ungleich Null mit einer die beiden Verbindungsöffnungen verbindenden Linie einschließt.

Eine Stange, insbesondere einer Trennwand innerhalb eines Tiertransporters, kann vorgesehen sein, wobei die Stange ein Verriegelungselement zum Einführen in eine Verriegelungsöffnung des Befestigungselements aufweist, zum Herstellen einer Verriegelungsverbindung zwischen der Stange und dem Befestigungselement.

Zudem können eine Trennwand für einen Tiertransporter mit der Stange und ein Tiertransporter mit dem Befestigungselement vorgesehen sein. Der Tiertransporter weist bevorzugt des Weiteren die Stange und/oder die Trennwand auf.

Ein Tiertransporter kann ein bekanntes Ausstellfenster aufweisen, bei dem während der Fahrt Fahrtwind durch das Ausstellfenster in den Innenbereich des Tiertransporters eindringt, wenn das Ausstellfenster geöffnet ist. Dadurch entstehen Wind- und Belüftungsverhältnisse in dem Tiertransporter, die beispielsweise dazu führen können, dass den Tieren zu kalt wird und dadurch beispielsweise Krankheiten verursacht werden.

Der Tiertransporter, insbesondere der Pferdeanhänger, kann ein Ausstellfenster zum Abdecken einer Öffnung, insbesondere einer vorderen seitlichen Öffnung, des Tiertransporters aufweisen, wobei die Öffnung eine erste Seite aufweist, die einer Fahrtrichtung zugewandt ist, eine zweite Seite, die der Fahrrichtung abgewandt ist, und eine dritte Seite, die die Öffnung unten begrenzt, wobei das Ausstellfenster mittels Fensterbefestigungsmitteln beweglich mit der ersten Seite verbunden ist.

Da das Ausstellfenster mittels Fensterbefestigungsmitteln beweglich mit der ersten Seite verbunden ist, wird auch beim Öffnen des Ausstellfensters die der Fahrtrichtung zugewandte Seite des Ausstellfensters nicht geöffnet sein, so dass weniger Fahrtwind oder sogar gar kein Fahrtwind von vorne durch die Öffnung in den Innenbereich des Tiertransporters gelangen kann.

Es ist bevorzugt, dass die Fensterbefestigungsmittel Gummielemente sind, die mit der Öffnung und dem Ausstellfenster verbunden sind. Es ist weiter bevorzugt, dass die Gummielemente zylinderförmig ausgebildet sind, wobei an gegenüberliegenden Enden eines Gummielements Verbindungselemente zum Verbinden, insbesondere Schraubelemente zum Verschrauben, des Gummielements mit der Öffnung und dem Ausstellfenster vorhanden sind. Die Schraubelemente verlaufen nicht durchgängig innerhalb des Gummielements, das heißt, ein mittlerer Querschnitt des zylinderförmig ausgebildeten Gummielements weist lediglich Gummi auf. In einer Ausführungsform kann das Gummielement tailliert sein, das heißt, der Durchmesser des Gummielements ist auf halber Höhe geringer als an den Enden des Gummielements.

Diese Gummielemente wirken als Scharniere und ermöglichen eine einfache Scharnier- bzw. Gelenkverbindung zwischen dem Ausstellfenster und der Öffnung, indem das eine Ende des jeweiligen Gummielements mit dem Ausstellfenster und ein anderes Ende des jeweiligen Gummielements mit dem Rand der Öffnung verbunden wird.

Es kann vorgesehen sein, dass das Austellfenster einen Griff zum Öffnen und Schließen des Ausstellfensters aufweist, wobei der Griff mittels einer Blattfeder mit der Öffnung verbunden ist. Die Blattfeder ist bevorzugt so mit dem Griff und der Öffnung verbunden, dass im geschlossenen Zustand die Blattfeder das Ausstellfenster in geschlossenem Zustand hält und dass beim Öffnen des Ausstellfensters zunächst eine Kraft in Ausstellrichtung ausgeübt werden muss, wobei, nachdem ein Totpunkt überschritten worden ist, die Blattfeder bestrebt ist, das Ausstellfenster zu öffnen und die Blattfeder das Ausstellfenster in der geöffneten Stellung hält.

Bevorzug ist die Blattfeder gelenkig mit der Öffnung verbunden.

Der Griff kann mittels einer oder mehrerer Blattfedern mit der Öffnung verbunden sein.

Es ist des Weiteren bevorzugt, dass die Öffnung mit einem Fensterrahmen versehen ist, wobei das Ausstellfenster zum Verbinden mit der Öffnung mit dem Fensterrahmen verbunden ist. Das heißt, bevorzugt ist das Ausstellfenster nicht unmittelbar mit der Öffnung verbunden, sondern mittelbar mittels des Fensterrahmens, der mit der Öffnung verbunden ist. Das heißt insbesondere, dass das Ausstellfenster mittels der Gummielemente mit dem Fensterrahmen verbunden ist, der wiederum mit der Öffnung verbunden ist, um das Ausstellfenster mittelbar mit der Öffnung, insbesondere mit der ersten Seite der Öffnung, zu verbinden.

Es ist des Weiteren bevorzugt, dass das Ausstellfenster unmittelbar oder mittelbar mittels des Fensterrahmens durch die Gummielemente ausschließlich an der ersten Seite verbunden ist, wobei eine weitere Verbindung des Ausstellfensters mit der dritten Seite der Öffnung durch den Griff und die Blattfeder erzeugt wird, wobei auch die Blattfeder bevorzugt mit dem Fensterrahmen verbunden ist, um den Griff mittels der Blattfeder mit der Öffnung zu verbinden.

Der Griff ist bevorzugt mittig an einer unteren Seite des Ausstellfensters befestigt, der der dritten Seite der Öffnung zugewandt ist. Der Griff ist bevorzugt innen an dem Ausstellfenster befestigt.

Die Erfindung betrifft des Weiteren ein Ausstellfenster mit einem Fensterrahmen, wobei das Ausstellfenster mit dem Fensterrahmen durch Gummielemente 507 beweglich verbunden ist.

Bevorzugte Ausführungsformen der Erfindung werden im Folgenden unter Bezugnahme auf die folgenden Zeichnungen beschrieben:
- Figur 1: zeigt beispielhaft eine Ansicht einer Halterung zum Halten eines ersten Endes einer Boxenstange gemäß einem ersten Ausführungsbeispiel,
- Figur 2: zeigt beispielhaft ein erstes Ende einer Boxenstange bevor es in die Halterung gemäß dem ersten Ausführungsbeispiel geführt wird,
- Figur 3: zeigt beispielhaft eine Ansicht einer zweiten Halterung zum Aufnehmen eines zweiten Endes der Boxenstange,
- Figur 4: zeigt beispielhaft eine Ansicht eines Innenraums eines Pferdetransporters mit einem erfindungsgemäßen Halterungssystem,
- Figur 5: zeigt beispielhaft eine Seitenansicht einer Ausführungsform eines Tiertransporters,
- Figur 6: zeigt schematisch und beispielhaft einige Elemente des in Figur 5 gezeigten Tiertransporters,
- Figuren 7 und 8: zeigen beispielhaft Ansichten einer Halterung,
- Figuren 9 und 10: zeigen beispielhaft Ansichten einer Aufnahme für ein Ende der Haltung,
- Figuren 11 und 12: zeigen beispielhaft Ansichten einer weiteren Halterung,
- Figuren 13 und 14: zeigen beispielhaft Ansichten einer weiteren Aufnahme zum Aufnehmen eines Endes der weiteren Halterung,
- Figur 15: zeigt beispielhaft eine Ansicht einer Ringschraube,
- Figuren 16 und 17: zeigen beispielhaft Ansichten von Ringelementen,
- Figur 18: zeigt beispielhaft eine Ansicht einer Boxenstange,
- Figur 19: zeigt beispielhaft eine nachrüstbare Polsterung für eine Polsterung einer Boxenstange zur Verwendung in einem Tiertransporter gemäß einem weiteren Ausführungsbeispiel,
- Figur 20: zeigt beispielhaft eine Boxenstange zur Verwendung in einem Tiertransporter,
- Figur 21: zeigt beispielhaft eine hintere obere Öffnung eines Tiertransporters, die mittels einer Plane verschlossen ist,
- Figur 22: zeigt beispielhaft die hintere obere Öffnung des Tiertransporters, wobei eine Abdeckplane geöffnet worden ist, sodass ein luftdurchlässiger Netzbereich freigelegt ist,
- Figur 23: zeigt beispielhaft die hintere obere Öffnung des Tiertransporters mit geöffneter Plane,
- Figur 24: zeigt beispielhaft eine Perspektivansicht einer Plane mit einer Abdeckplane zum Abdecken eines luftdurchlässigen Netzbereichs der Plane,
- Figur 25: zeigt beispielhaft eine Innenansicht der Plane,
- Figur 26: zeigt beispielhaft eine Schnittansicht der Plane,
- Figur 27: zeigt beispielhaft einen vergrößerten Ausschnitt der Schnittansicht von Figur 26.
- Figur 28: zeigt beispielhaft einen weiteren vergrößerten Ausschnitt der Schnittansicht von Figur 26,
- Figur 29: zeigt beispielhaft eine Außenansicht der Plane,
- Figur 30: zeigt beispielhaft eine Draufsicht von oben auf die in Figur 24 gezeigte Plane,
- Figur 31: zeigt beispielhaft ein Ende einer Stange, das mittels eines Befestigungselements mit einer Bodenplatte eines Tiertransporters verbunden ist,
- Figur 32: zeigt eine beispielhafte Perspektivansicht einer Stangenseite des Befestigungselements,
- Figur 33: zeigt beispielhaft eine Perspektivansicht einer Bodenseite des Befestigungselements,
- Figur 34: zeigt beispielhaft eine Ansicht der Stangenseite des Befestigungselements,
- Figur 35: zeigt beispielhaft eine Schnittansicht entlang der Linie C-C in Figur 34,
- Figur 36: zeigt beispielhaft eine Schnittansicht entlang der Linie B-B in Figur 34,
- Figur 37: zeigt beispielhaft eine Schnittansicht entlang der Linie A-A in Figur34,
- Figur 38: zeigt beispielhaft eine Ansicht der Bodenseite des Befestigungselements,
- Figur 39: zeigt beispielhaft eine Perspektivansicht einer Stange mit einem Verriegelungselement zum Verriegeln mit dem Befestigungselement,
- Figur 40: zeigt beispielhaft eine weitere Ansicht der Stange mit dem Verriegelungselement,
- Figur 41: zeigt beispielhaft eine Ansicht der Stange mit dem Verriegelungselement entlang der Linie X-X in Figur 40,
- Figur 42: zeigt beispielhaft eine Ansicht der Seite der Stange, die im eingebauten Zustand dem Befestigungselement zugewandt ist,
- Figur 43: zeigt beispielhaft eine Trennwand in einem Innenbereich eines Pferdeanhängers mit einer mittleren durchgehenden Stange,
- Figur 44: zeigt beispielhaft eine weitere Trennwand in einem Innenbereich eines Tiertransporters,
- Figur 45: zeigt beispielhaft einen Tiertransporter mit einem Ausstellfenster,
- Figur 46: zeigt beispielhaft eine Nahansicht des Ausstellfensters von Außen,
- Figur 47: zeigt beispielhaft eine Innenansicht des Ausstellfensters, und
- Figur 48: zeigt beispielhafte eine Perspektivansicht eines Gummielements zum Verbinden des Ausstellfensters mit einem Fensterrahmen.
- Figur 49: zeigt das Ausstellfenster in einem geöffneten Zustand von außen.
- Figur 50: zeigt das Ausstellfenster in einem geöffneten Zustand von innen.

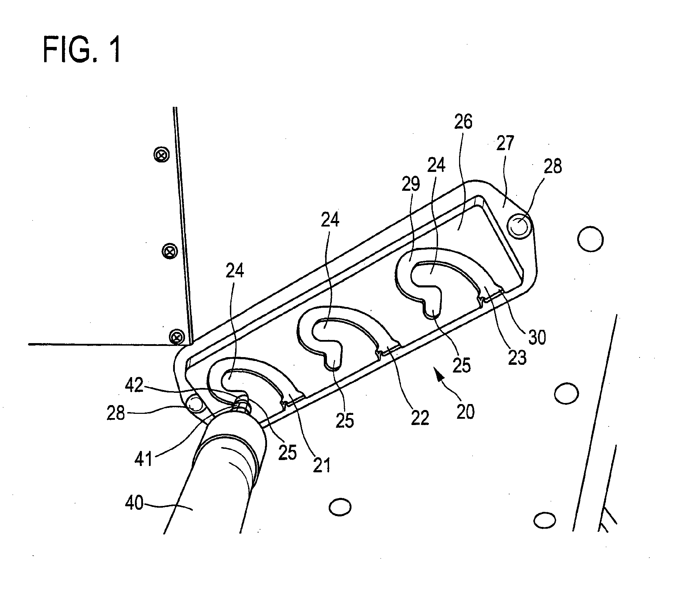

Figur 1 zeigt eine Halterung 20 mit einer ersten Führung 21, einer zweiten Führung 22 und einer dritten Führung 23. Die zweite Führung 22 führt um eine Zunge herum, die einen Anschlag 24 bildet, zu einem Endbereich 25 der zweiten Führung 22. Die erste Führung 21 und die dritte Führung 23 weisen die gleiche Form wie die zweite Führung 22 auf und besitzen demnach jeweils auch einen Anschlag 24 und einen Endbereich 25. Eine Boxenstange 40 weist ein erstes Ende 41 (das andere Ende) auf, das sich in dem Endbereich der ersten Führung 21 befindet.

Die Halterung 20 weist weiterhin eine erste Ebene 26 und eine zweite Ebene 27 auf. In der zweiten Ebene 27 sind Nieten 28 oder Schrauben angeordnet, die die Halterung beispielsweise an der Innenwand eines Pferdetransporters befestigen. Die erste Ebene 26 weist die Führungen 21, 22 und 23 auf und ist von der zweiten Ebene 27 abgesetzt, d. h. zwischen der ersten Ebene 26 und der zweiten Ebene 27 bzw. der Wand eines Pferdetransporters entsteht ein Hohlraum 29. Dieser dient zum Aufnehmen eines hinteren Teils 42 des ersten Endes 41 der Boxenstange 40. Die Führungen 21, 22 und 23 sind überwiegend bogenförmig ausgebildet, damit ein gutes Gleiten des ersten Endes 41 durch die Führungen 21, 22 oder 23 möglich ist und ein Verkanten des ersten Endes 41 der Boxenstange 40 möglichst vermieden wird. Wird die Boxenstange beispielsweise durch eine Vibration des Transporters oder durch ein Tier, das gegen die Boxenstange schlägt, beansprucht, so wird durch den Anschlag 24 verhindert, dass die Boxenstange 40 aus der entsprechenden Führung bzw. aus der Halterung rutschen kann. Bei einer derartigen Beanspruchung könnte die Boxenstange 40 höchstens gegen den Anschlag 24 schlagen, aber nicht aus der jeweiligen Führung 21, 22 oder 23 herausrutschen.

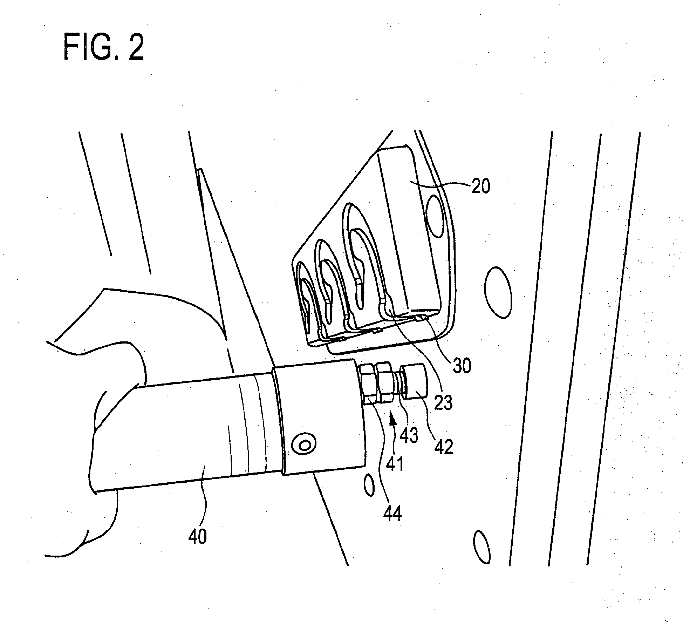

Figur 2 zeigt die Boxenstange 40 mit dem ersten Ende 41 bevor das erste Ende 41 in die dritte Führung 23 der Halterung 20 eingeführt wird. Das erste Ende 41 der Boxenstange 40 ist bolzenförmig ausgebildet und weist eine Verjüngung 43 auf. Der Bolzen weist einen hinteren Teil 42, der hinter der Verjüngung 43 liegt und einen vorderen Teil 44, der vor der Verjüngung 43 liegt, auf. Nach dem Einführen des ersten Endes (bzw. des Bolzens) 41 in die dritte Führung 23 befindet sich der hintere Teil 42 in dem Hohlraum 29 zwischen der ersten Ebene 26 und zweiten Ebene 27 (siehe auch Figur 1). Die Verjüngung 43 befindet sich in der Führung 23 und der vordere Teil 44 des ersten Endes 41 befindet sich vor der ersten Ebene 26. Da der Durchmesser des Bolzens im vorderen Teil 44 und im hinteren Teil 42 größer ist als der Durchmesser der Schiene bzw. der Führung 23, kann die Boxenstange 40, wenn sie sich in der Führung 23 befindet, nicht in Richtung der Längsachse der Boxenstange 40 bewegt werden, sondern nur entlang der Führung 23. Zur Aufnahme des hinteren Teils 42 in den Hohlraum 29 ist an einem Anfangsbereich 30 der dritten Führung 23 (und auch der ersten Führung 21 und der zweiten Führung 22) eine Verbreiterung vorgesehen, damit der hintere Teil 42 in den Hohlraum 29 aufgenommen werden kann.

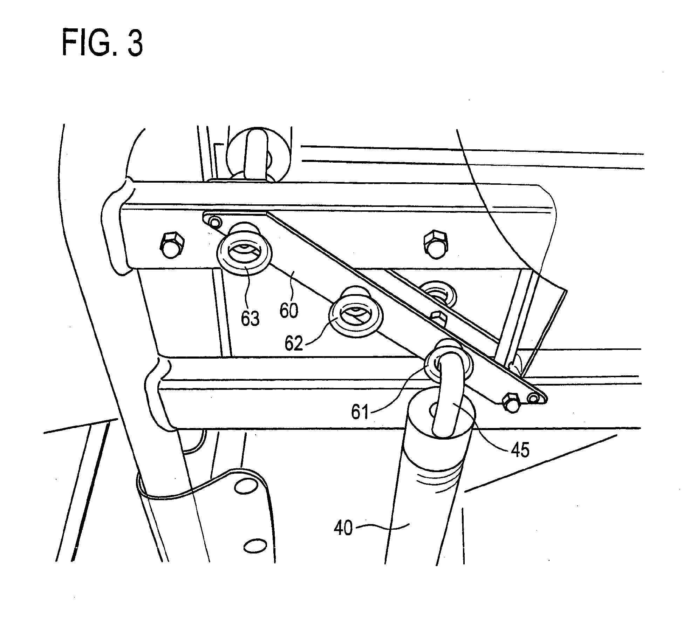

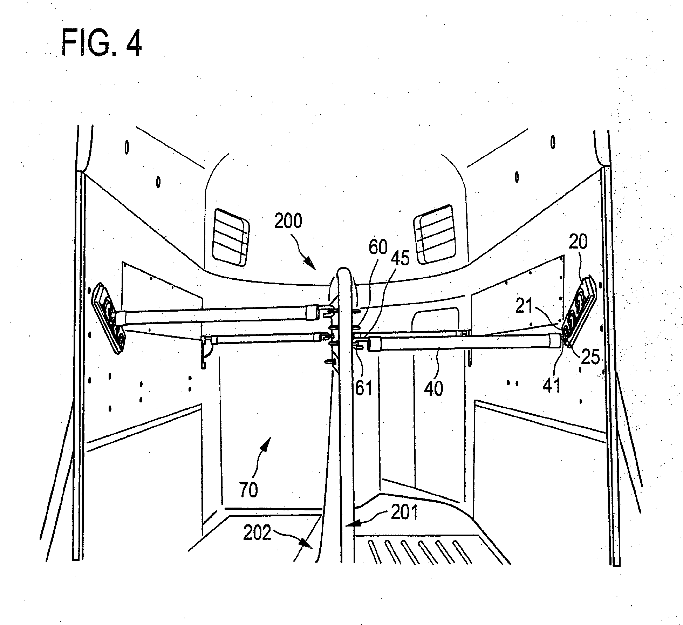

Figur 3 zeigt eine zweite Halterung 60 mit einem ersten Halterungsring 61, einem zweiten Halterungsring 62 und einem dritten Halterungsring 63. Die zweite Halterung 60 ist an einem Pferdetransporter 70 (siehe Figur 4) befestigt. Ein zweites Ende 45 (das eine Ende) der Boxenstange 40 ist im Wesentlichen U-förmig, wobei das U verschieden lange Schenkel aufweist, so dass das zweite Ende 45 in den ersten Ring 61 bzw. den zweiten Ring 62 oder den dritten Ring 63 eingehängt werden kann. Der erste Ring 61 befindet sich bevorzugt gegenüber dem Endbereich der ersten Führung 21, der zweite Ring 62 befindet sich bevorzugt gegenüber dem Endbereich der zweiten Führung 22 und der dritte Ring 63 befindet sich bevorzugt gegenüber dem Endbereich der dritten Führung 23. In dem in Figur 3 dargestellten Zustand hängt die Boxenstange 40 nach unten, so dass sich die Box in einem geöffneten Zustand befindet. Ein Bewegen des ersten Endes 41 der Boxenstange 40 zu der ersten Führung 21 der Halterung 20 würde die Verbindung des zweiten Endes 45 mit dem ersten Ring 61 nicht lösen. Hierzu wäre eine Bewegung der Stange 40 in Längsrichtung nach oben erforderlich.

Figur 4 zeigt den Innenraum eines Pferdetransporters mit einem erfindungsgemäßen Halterungssystem. Die Boxenstange 40 ist mit ihrem zweiten Ende 45 in den ersten Ring 61 der zweiten Halterung 60 eingehängt. Das erste Ende 41 befindet sich in der Endposition bzw. in dem Endbereich 25 der ersten Führung 21. Das zweite Ende 45 kann nicht aus dem ersten Ring 61 gelöst werden, ohne zuvor das erste Ende 41 aus der Halterung 20 bzw. aus der ersten Führung 21 zu lösen. Ein ungewolltes Herausrutschen des ersten Endes 41 aus der Führung 21 wird jedoch durch einen vorhandenen Anschlag 24 an der Halterung 20 verhindert. Die Größe der Box kann verändert werden, indem die Boxenstange 40 in einem anderen Ring oder in eine andere Führung eingehängt wird. In Abhängigkeit der Schrägstellung der Halterungen und in Abhängigkeit des Abstandes der Führungen bzw. der Ringe kann die resultierende Größe der Box definiert werden. Ein Winkelbereich von etwa 30 bis 60 Grad und ein Abstand zwischen den Endbereichen der Führungen von etwa 4 bis 15 cm haben sich dabei als vorteilhaft für Pferdetransporter erwiesen.

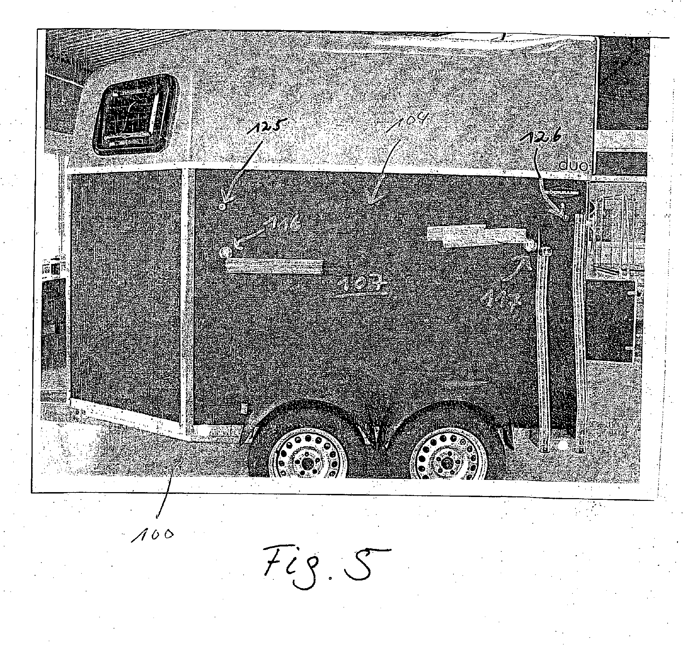

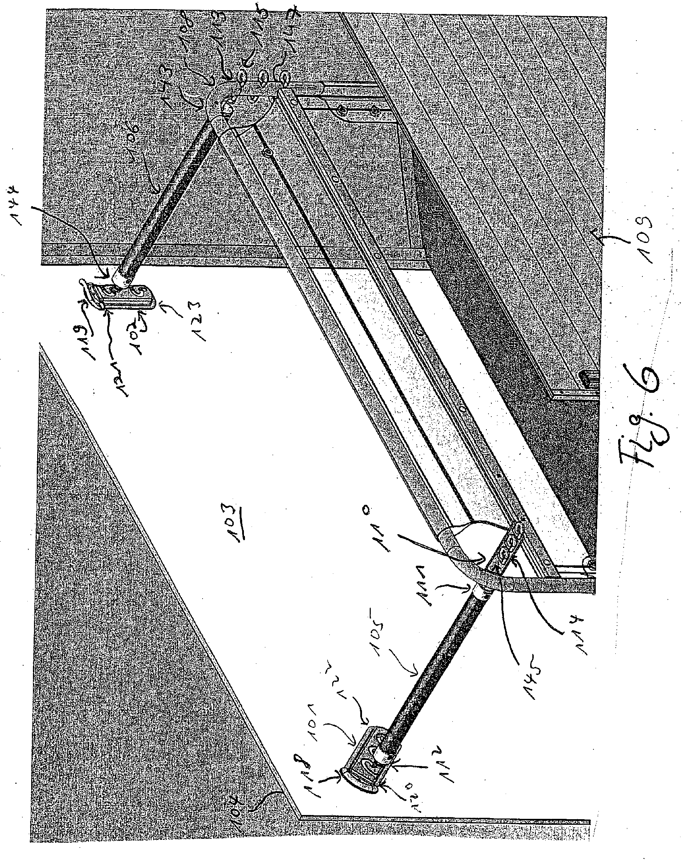

Figur 5 zeigt beispielhaft eine Seitenansicht eines Pferdetransporters 100. An der Außenfläche 107 der Seitenwand 104 des Pferdetransporters 100 sind Ringschrauben 116, 117 zum Halten von ersten Halterungen 101, 102 gezeigt, die beispielsweise in der Figur 6 zu sehen sind. Zudem zeigt Figur 5 zwei Schraubelemente 125, 126 zum Befestigen von Aufnahmen 118, 119, die ebenfalls in der Figur 6 zu erkennen sind. Anstelle der Schraubelemente 125, 126 können auch andere Befestigungsmittel verwendet werden, wie beispielsweise Nietverbindungen, da die Aufnahmen 118, 119 nicht zwingend leicht lösbar sein müssen. Die Ringschrauben 116, 117 sollten dagegen relativ leicht gelöst werden können, so dass die Halterungen 101, 102 im Notfall durch Lösen der Ringschrauben 116, 117 von der Wand 104 gelöst und beispielsweise auf den Boden des Pferdetransporters 100 fallen können.

Figur 6 zeigt eine Ansicht einiger Elemente des Pferdetransporters 100 von schräg hinten. In Figur 6 ist zu erkennen, dass an der Innenfläche 103 der Außenwand 104 die Halterungen 101, 102 befestigt sind. Die Halterungen 101, 102 sind Halterungen für eine Boxenstange 105, 106 des Pferdetransporters 100, die mittels der Aufnahmen 118, 119 und der Ringschrauben 116, 117 an der Innenfläche 103 der Außenwand 104 befestigt sind. Die Aufnahme 118 ist angepasst zum Aufnehmen eines ersten Endes 120 der Halterung 101 und ein zweites Endes 122 der Halterung 101 ist mittels der Ringschraube 117 an der Wand 104 befestigt. Entsprechend ist die Aufnahme 119 angepasst, ein erstes Ende 121 der Halterung 102 aufzunehmen, wobei ein zweites Ende 123 der Halterung 102 mittels der Ringschraube 116 an der Wand 104 befestigt ist.

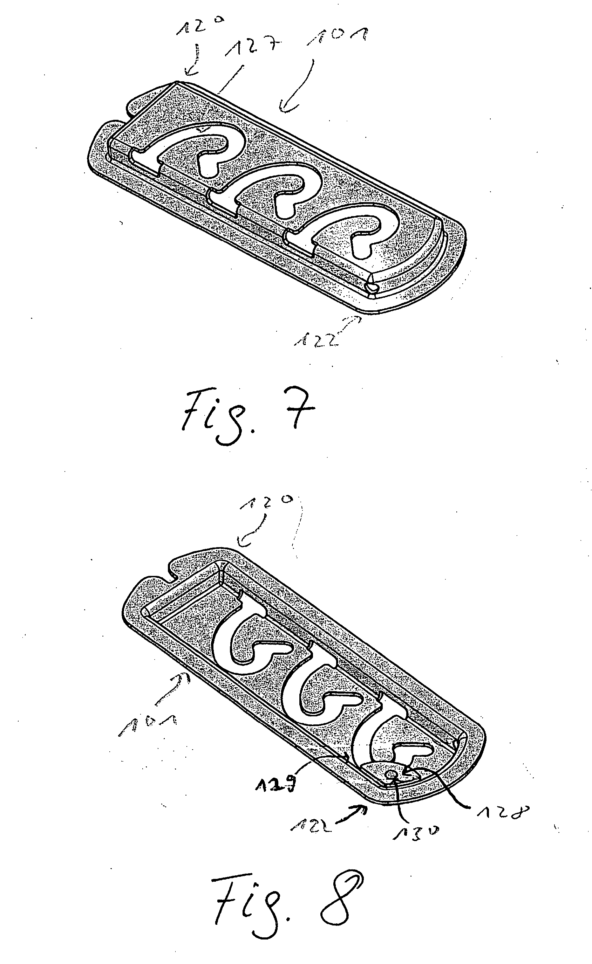

Die Figuren 7 und 8 zeigen die Halterung 101 etwas detaillierter. Figur 7 ist eine Draufsicht auf die Seite der Halterung 101, die im Einbau von der Wand 104 abgewandt ist, und Figur 8 zeigt eine Draufsicht auf eine Seite der Halterung 101, die im Einbau der Außenwand 104 zugewandt ist. Die Halterung 101 weist Führungen 127 auf, die den oben bereits beschriebenen Führungen entsprechen. In Figur 8 ist zu erkennen, dass an dem zweiten Ende 122 der Halterung 101 in einer Vertiefung 129 ein Element 128 mit einer Schrauböffnung 130 angeordnet ist. Die Schrauböffnung 130 wirkt mit der Ringschraube 117 zum Befestigen des zweiten Endes 122 der Halterung 101 an der Innenfläche 103 zusammen.

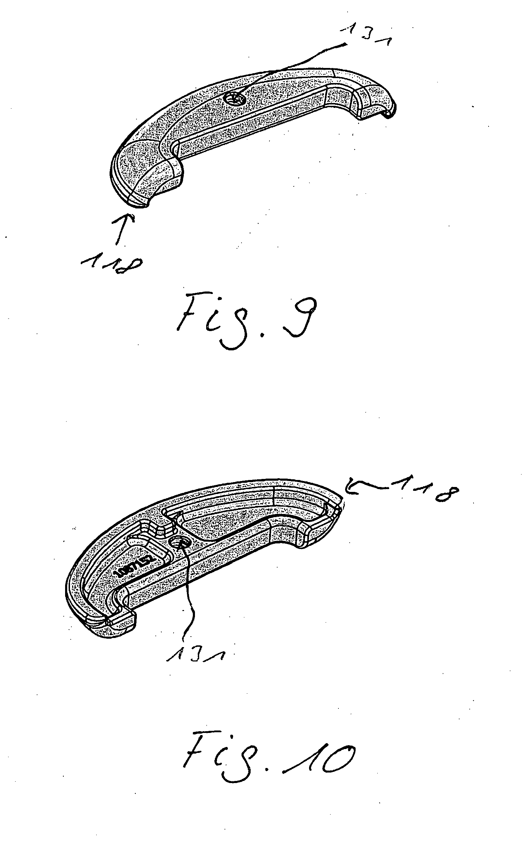

Die Figuren 9 und 10 zeigen zwei Ansichten der Aufnahme 118. Figur 9 zeigt eine Draufsicht auf eine Seite der Aufnahme 118, die im Einbau von der Seitenwand 104 abgewandt ist, und Figur 10 zeigt eine Draufsicht auf eine Seite der Aufnahme 118, die im Einbau der Seitenwand 103 zugewandt ist. Die Aufnahme 118 weist eine mittige Schrauböffnung 131 auf, die mit dem Schraubelement 126 zum Befestigen der Aufnahme 118 an der Innenfläche 103 der Seitenwand 104 zusammenwirkt.

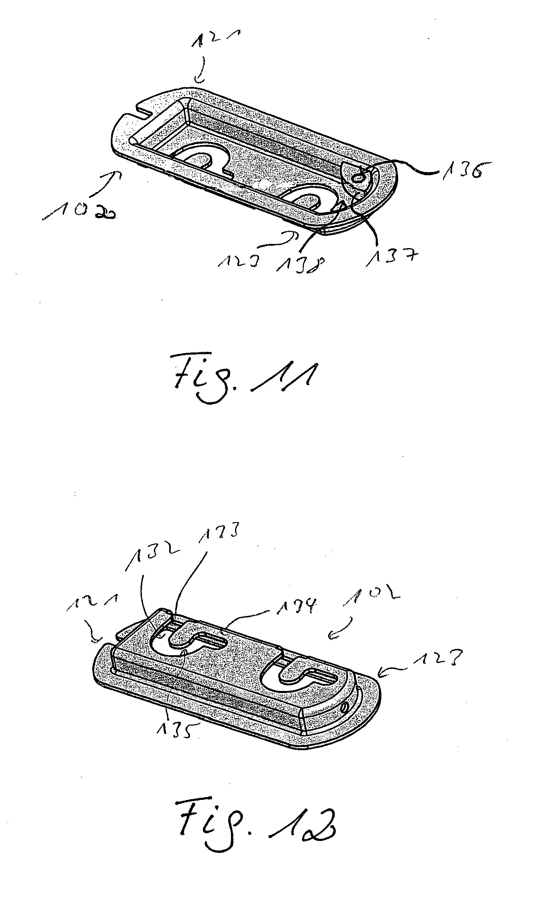

Die Halterung 102 ist in den Figuren 11 und 12 gezeigt. Figur 11 zeigt eine Draufsicht auf eine Seite der Halterung 102, die im eingebauten Zustand der Seitenwand 104 zugewandt ist, und Figur 12 zeigt eine Draufsicht auf eine Seite der Halterung 102, die im eingebauten Zustand der Seitenwand 104 abgewandt ist. Die Halterung 102 weist zwei Führungen 132 auf, die einen Anfangsbereich 133 zum Aufnehmen eines Endes der Boxenstange mit einem Endbereich 134 zum Arretieren des Endes der Boxenstange verbinden. Zwischen dem Anfangsbereich 133 und dem Endbereich 134 ist ein Anschlag 135 vorgesehen, um ein ungewolltes Herauslösen des Endes der Boxenstange aus dem Endbereich 143 zu verhindern. Die Führung 132 weist daher einen im Wesentlichen gebogenen Bereich und einen sich anschließenden, den Endbereich bildenden linearen Bereich auf. In einer Vertiefung 138 der Halterung 102 ist ein Element 137 mit einer Schrauböffnung 136 vorgesehen. Das Element 137 ist in einem Eckbereich der Vertiefung 138 an dem zweiten Ende 123 der Halterung 102 angeordnet. Die Schrauböffnung 136 wirkt mit der Ringschraube 116 zusammen, um das zweite Ende 123 der Halterung 102 an der Innenfläche 103 der Seitenwand 104 zu befestigen.

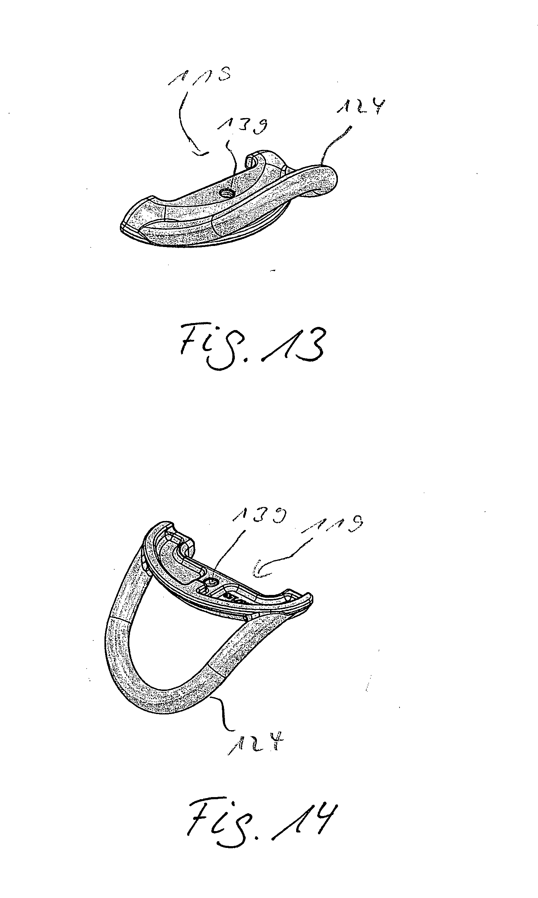

Die Figuren 13 und 14 zeigen Ansichten der Aufnahme 119 zum Aufnehmen des ersten Endes 121 der Halterung 101. Die Aufnahme 119 weist eine Schrauböffnung 139 auf, die angepasst ist, um mit dem Schraubelement 125 zum Befestigen der Aufnahme 119 an der Innenfläche 103 der Außenwand 104 zusammenzuwirken. Zudem weist die Aufnahme 119 einen Anbindering 124 zum Anbinden eines Pferdes auf.

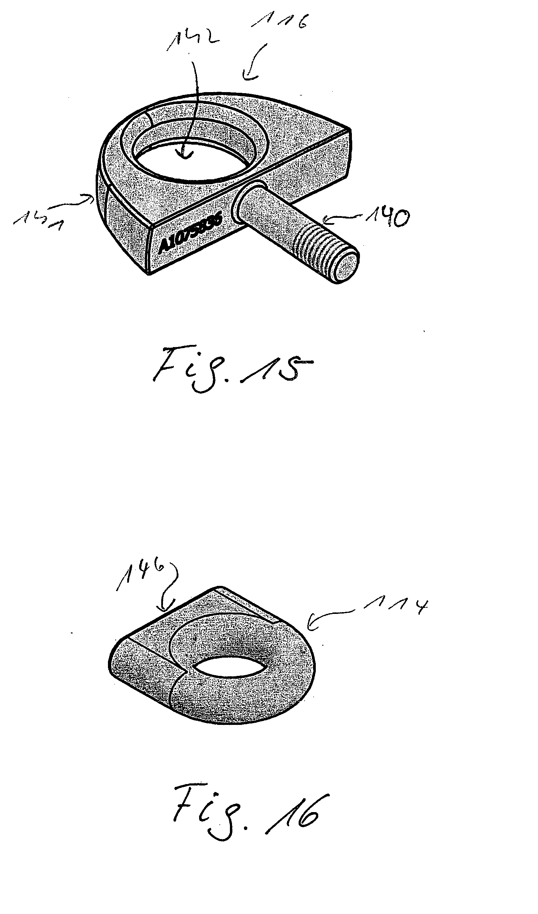

Figur 15 zeigt das Schraubelement 116 mit einem Schraubbolzen 140 und einem Ringelement 141. Durch die Öffnung 142 des Ringelements 141 kann beispielsweise ein Stiel oder Stock geführt werden, um insbesondere in einer Notfallsituation die Ringschraube 116 schnell lösen zu können. Die weitere Ringschraube 117 ist bevorzugt ähnlich, insbesondere genauso ausgebildet, wie die in Figur 15 gezeigte Ringschraube 116.

Wieder Bezug nehmend auf Figur 6, können die Halterungen 101, 102 zum Halten eines ersten Endes 112, 144 der Boxenstange 105, 106 als erste Halterungen aufgefasst werden. Die zweiten Enden 111, 143 der Boxenstange 105, 106 werden mit zweiten Halterungen 110, 113 an einer Trennwand 108 gehalten. Die Trennwand ist zwischen der Seitenwand 104, die als erste Seitenwand bezeichnet werden kann, und einer gegenüberliegenden zweiten Seitenwand 109 angeordnet, um zwei Pferde voneinander zu trennen. Die zweiten Halterungen 110, 113 weisen Ringelemente 114, 115 zur Aufnahme des zweiten Endes 111, 143 der Boxenstange 105, 106 auf. Die Ringelemente 114 der zweiten Halterung 110 verlaufen schräg zur Horizontalen und sind an einer planaren Strebe 145 angeordnet. Eines dieser Ringelemente 114 ist in Figur 16 dargestellt. Das Ringelement 114 weist eine planare Seitenfläche 146 auf, die mit der planaren Strebe 145 verschweißt wird. In diesem Ausführungsbeispiel weist die Halterung 110 drei Ringelemente 114 auf, die an verschiedenen Höhen angeordnet sind, die den Höhen der Führungen, insbesondere der Endbereiche der Führungen, der ersten Halterung 101 entsprechen. Die Ringelemente 115 der zweiten Halterung 113 sind im Wesentlichen entlang einer Vertikalen angeordnet, wobei die Höhen von zumindest zwei Ringelementen 115 den Höhen der Führungen, insbesondere der Endbereiche der Führungen, der Halterung 102 entsprechen. Die Anordnung der Ringelemente und der Führungen in verschiedenen Höhen ermöglicht es, die jeweilige Boxenstange in einer Höhe zu halten, die der Größe des jeweils zu transportierenden Pferdes entspricht.

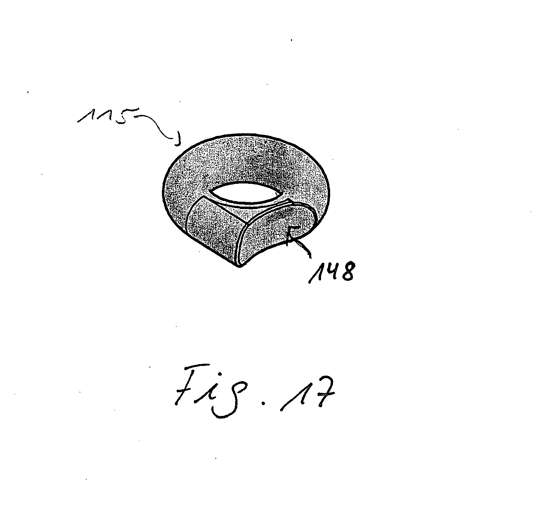

Die Ringelemente 115 der zweiten Halterung 113 sind bevorzugt an einem Rohrelement 147 der Trennwand 108 befestigt. Eines dieser Ringelemente 115 ist in Figur 17 gezeigt. Das Ringelement 115 weist eine abgerundete Außenfläche 148 auf, die mit dem Rohrelement 147 verschweißt wird.

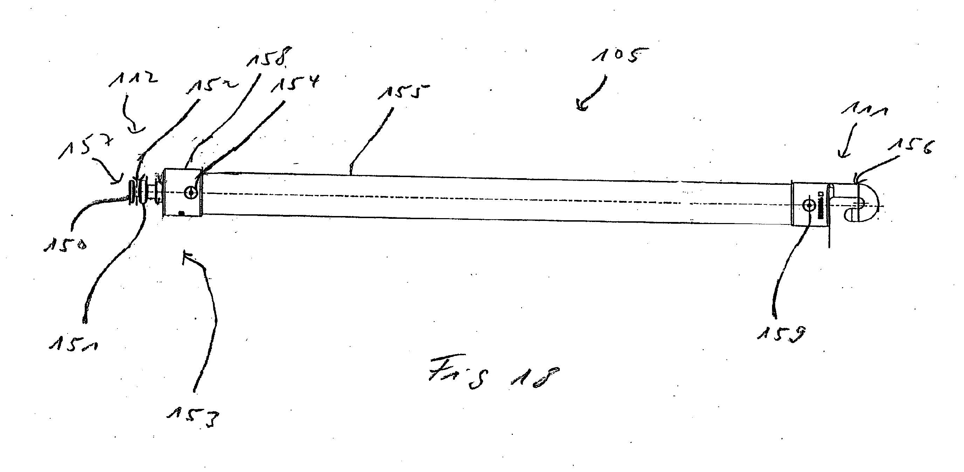

Figur 18 zeigt beispielhaft eine Ausführungsform der Boxenstange 105. Das erste Ende 112 der Boxenstange 105 weist ein Boxenstangenendstück 153 mit einem Nutbolzen 157 auf. Der Nutbolzen 157 umfasst eine Führungsnut 152 zwischen zwei axial voneinander beabstandet angeordneten Erweiterungen 150, 151 des Nutbolzens 157. Die Erweiterungen 150, 151 sind bevorzugt kreisförmig ausgebildet. Der Durchmesser des Nutbolzens im Bereich der Führungsnut 152 ist bevorzugt kleiner als der Durchmesser außerhalb der Führungsnut 152. Die Führungsnut 152 ist angepasst, um beispielsweise in den Führungen 127 der Halterung 101 geführt zu werden. Das Boxenstangenendstück 153 weist zudem eine Befestigungshülse 158 auf, die über ein Befestigungsmittel 154 mit der Boxenstange verbunden ist. Das Befestigungsmittel 154 ist beispielsweise eine Befestigungsschraube oder ein Befestigungsniet. Die Boxenstange 105 weist zudem einen Überzugsschlauch 155 auf, der bevorzugt über ein inneres Rohr der Boxenstange gezogen ist. Das zweite Ende 111 der Boxenstange 105 umfasst ein Hakenendstück 156 zum Einhaken in die Ringelemente 114. Auch das Hakenendstück 156 ist bevorzugt über ein Befestigungsmittel 159 wie beispielsweise eine Befestigungsschraube oder ein Befestigungsniet mit der Boxenstange verbunden.

Obwohl oben bestimmte Anordnungen der ersten und zweiten Halterungen beschrieben worden sind, können diese natürlich auch anders angeordnet werden. Die ersten Halterungen und/oder die zweiten Halterungen können beispielsweise vertikal, horizontal und/oder diagonal, insbesondere mit einem Winkel von 45 Grad zu der Horizontalen, in dem Pferdetransporter befestigt sein. Zudem könnten auch die ersten Halterungen an einer Trennwand befestigt sein. Die zweiten Halterungen könnten auch an einer Außenwand befestigt sein.

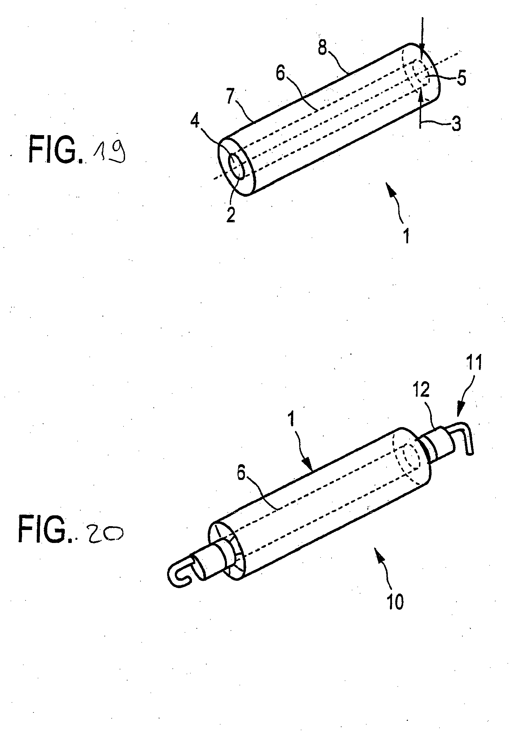

Figur 19 zeigt eine nachrüstbare Polsterung 1 zur Polsterung einer Boxenstange zur Verwendung in einem Tiertransporter. Die nachrüstbare Polsterung 1 weist ein durchgehendes Loch 2 auf und ist röhrenförmig ausgebildet. Die nachrüstbare Polsterung besteht aus einem weichelastischen Schaum, der eine Dehneigenschaft aufweist. Ein Durchmesser 3 der Polsterung 1 ist kleiner als der Durchmesser einer Boxenstange, über die die nachrüstbare Polsterung gestülpt wird. Beim Überstülpen der Polsterung dehnt sich das Loch 2 aus und presst sich somit an die Boxenstange an. Das Überstülpen über die Boxenstange geschieht durch eine erste Öffnung 4 oder eine zweite Öffnung 5 der nachrüstbaren Polsterung 1. Eine Innenseite 6 der nachrüstbaren Polsterung weist bevorzugt eine rutschfeste Schicht auf, so dass ein Verrutschen der Polsterung von der Boxenstange in Längsrichtung oder in radialer Richtung erschwert wird. Eine Außenseite 7 der Polsterung 1 ist bevorzugt mit einer Schutzhülle 8 versehen, die die Polsterung schützt und eine weiche, Hand schmeichelnde Außenseite besitzt. Die Hülle 8 wirkt auch als eine Art Bezug, die ggf. ausgewechselt und gewaschen werden kann.

Figur 20 zeigt eine Boxenstange 11 mit einer nachrüstbaren Polsterung 1. Die nachrüstbare Polsterung 1 besteht im Wesentlichen aus einem dehnbaren Schaumteil und kann daher gut über die Boxenstange 11 gestülpt werden. Der weichelastische dehnbare Schaum ist durch diese Eigenschaften auch bei unebenen Außenseiten 12 der Boxenstange 11 rutschfest mit dieser verbunden. Ebenso kann die nachrüstbare Polsterung über eine Boxenstange 11 gezogen werden, die ihrerseits bereits eine Polsterung aufweist. Die nachrüstbare Polsterung 1 stellt somit eine einfache Möglichkeit dar, die Polstereigenschaften einer vorhandenen Boxenstange nachträglich zu verbessern. Durch die Auswahl des Materials und der Abmessungen der nachrüstbaren Polsterung 1 wird eine einfache Befestigung ermöglicht, die eine rutschfeste Verbindung zwischen der Boxenstange und der nachrüstbaren Polsterung 1 durch Anpressen und ggf. durch Verwendung von rutschfestem Material erreicht. Die Boxenstange 11 ist in einem Tiertransporter, insbesondere einem Pferdetransporter, beispielsweise einem Pferdeanhänger, einhängbar und begrenzt somit eine Box, in der sich beispielsweise ein Pferd oder ein anderes Tier befindet.

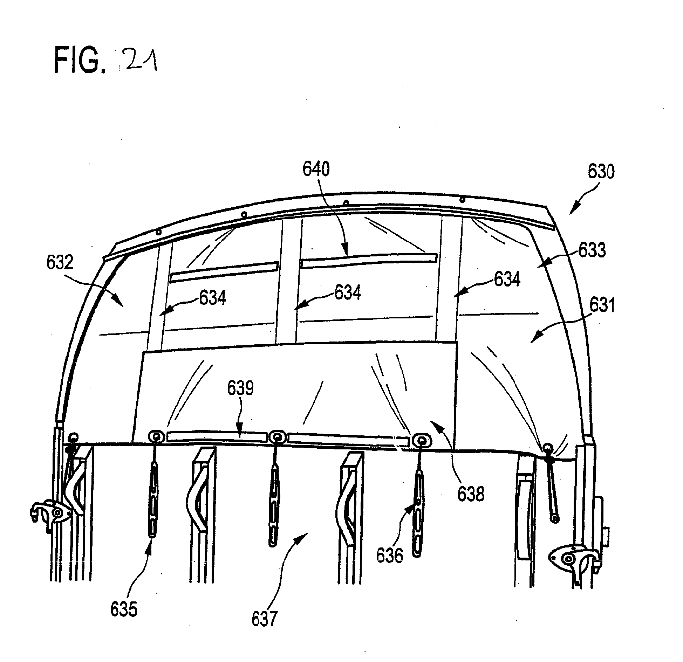

Figur 21 zeigt beispielhaft einen Tiertransporter 630 mit einer Plane 631 zur Abdeckung einer hinteren oberen Öffnung 632. Die Plane 631 weist einen luftundurchlässigen Bereich 633 und einen luftdurchlässigen Netzbereich auf, der in Figur 21 nicht zu erkennen ist und unten näher beschrieben wird.

Die Plane 631 ist ein Planenlift, das heißt in dieser Ausführungsform, dass die Plane 631 mit Blattfedern versehen ist, die in vertikalen Taschen 634 der Plane 631 verlaufen. Die Blattfedern sind derart ausgebildet, dass sie das Bestreben haben sich und damit die Plane 631 aufzurollen, so dass die hintere obere Öffnung 632 freigegeben wird.

Um die Plane 631 in dem in Figur 21 gezeigten geschlossenen Zustand zu halten, weist die Plane 631 an ihrem unteren Rand Schlaufen 635 auf, die an Vorstehungen 636 des Tiertransporters 630, insbesondere an einer hinteren Klappe 637 des Tiertransporters 630, lösbar befestigbar sind, um die Plane 631 in dem geschlossenen Zustand zu halten.

Die Plane weist des Weiteren eine Abdeckplane 638 zum Abdecken des luftdurchlässigen Netzbereichs auf. Die Abdeckplane 638 und die Plane 631 sind so ausgebildet, dass die Abdeckplane 638 zwischen einem ersten Zustand und einem zweiten Zustand veränderbar ist, wobei in dem ersten Zustand in dieser Ausführungsform der Netzbereich vollständig bedeckt ist und in dem zweiten Zustand in diesem Ausführungsbeispiel der Netzbereich nicht bedeckt ist. In Figur 21 ist der erste Zustand gezeigt.

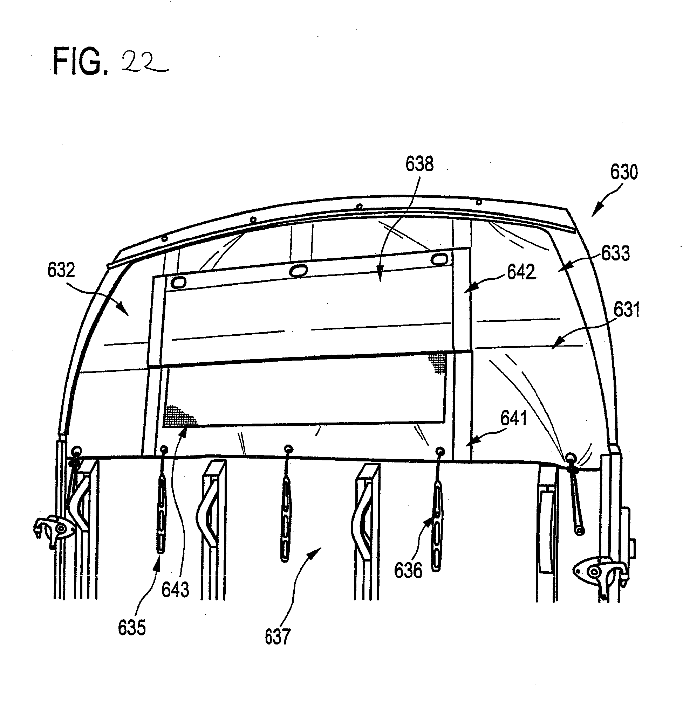

Die Plane 631 und die Abdeckplane 638 weisen Haltemittel 639, 640, insbesondere Klettverschlüsse, auf, um die Abdeckplane 638 in dem zweiten Zustand zu halten. Die Haltemittel 639 der Abdeckplane 638 sind so angeordnet, dass sie entlang des unteren äußeren Randes der Abdeckplane 638 verlaufen, wenn die Abdeckplane 638 in dem ersten Zustand ist, das heißt, wenn die Abdeckplane 638 den Netzbereich bedeckt. Die Haltemittel 640 sind auf der Plane 631 derart angeordnet, dass sie, wenn die Abdeckplane 638 hochgeklappt ist, um in dem zweiten Zustand den Netzbereich freizugeben, mit den Haltemitteln 639 der Abdeckplane 638 zusammenwirken, um die Abdeckplane 638 in dem zweiten Zustand zu halten. Dieser zweite Zustand ist beispielhaft in Figur 22 gezeigt.

Da in dem in Figur 22 gezeigten zweiten Zustand die Abdeckplane 638 den Netzbereich 643 freigegeben hat, ist dieser Netzbereich 643 in der Figur 22 zu erkennen. Des Weiteren sind in der Figur 22 Haltemittel 641, 642, insbesondere Klettverschlüsse, zu erkennen, die die Abdeckplane 638 in dem in Figur 21 gezeigten ersten Zustand halten können. Es ist auch möglich, die Abdeckplane 638 mittels der Haltemittel 641, 642 so zu befestigen, dass der Netzbereich 643 zu einem gewünschten Anteil bedeckt ist, beispielsweise zu 650 Prozent.

Die Haltemittel 641 der Plane 631 verlaufen vertikal auf dem undurchlässigen Bereich 633 benachbart zu dem Netzbereich 643 und die Haltemittel 642 der Abdeckplane 638 verlaufen im ersten Zustand oder im zweiten Zustand vertikal am Rand der Abdeckplane 638 derart, dass in dem geschlossenen ersten Zustand die Haltemittel 641, 642 zusammenwirken können, um die Abdeckplane 638 in diesem ersten Zustand zu halten.

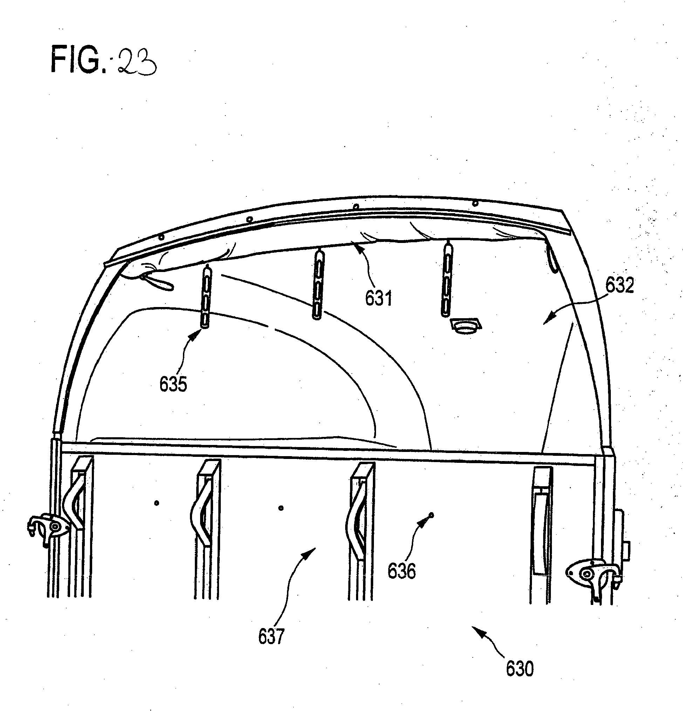

Figur 23 zeigt beispielhaft den Tiertransporter 630 in einem Zustand, in dem die Plane 631 mittels der Blattfedern aufgerollt worden ist, so dass die hintere Öffnung 632 des Tiertransporters 630 freigegeben ist.

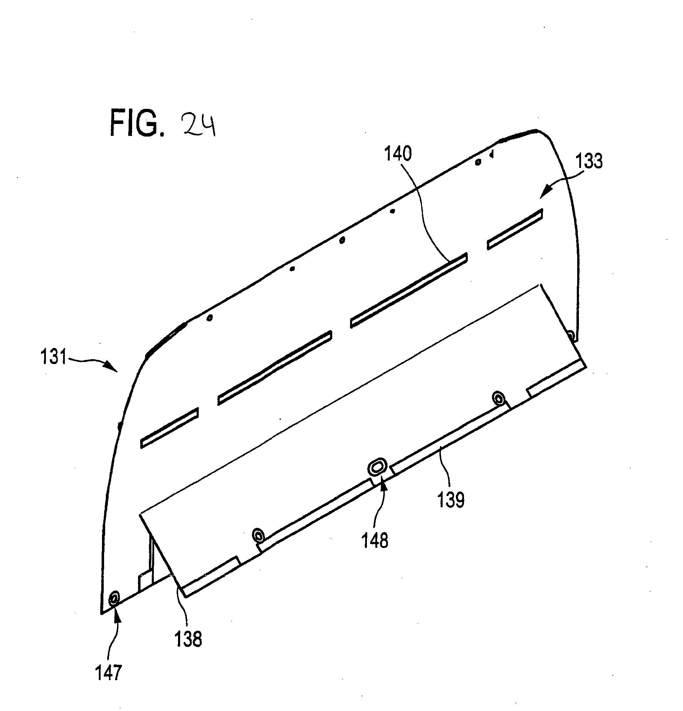

Figur 24 zeigt beispielhaft eine weitere Ausführungsform einer Plane 131 mit einer Abdeckplane 138. Auch die Plane 131 und die Abdeckplane 138 weisen Haltemittel 139, 140, insbesondere Klettverschlüsse, auf, die im ausgezogenen Zustand der Plane 131 und dem ersten Zustand der Abdeckplane 138 im Wesentlichen horizontal angeordnet sind und die Abdeckplane 138 in einem zweiten Zustand an der Plane 131 halten können.

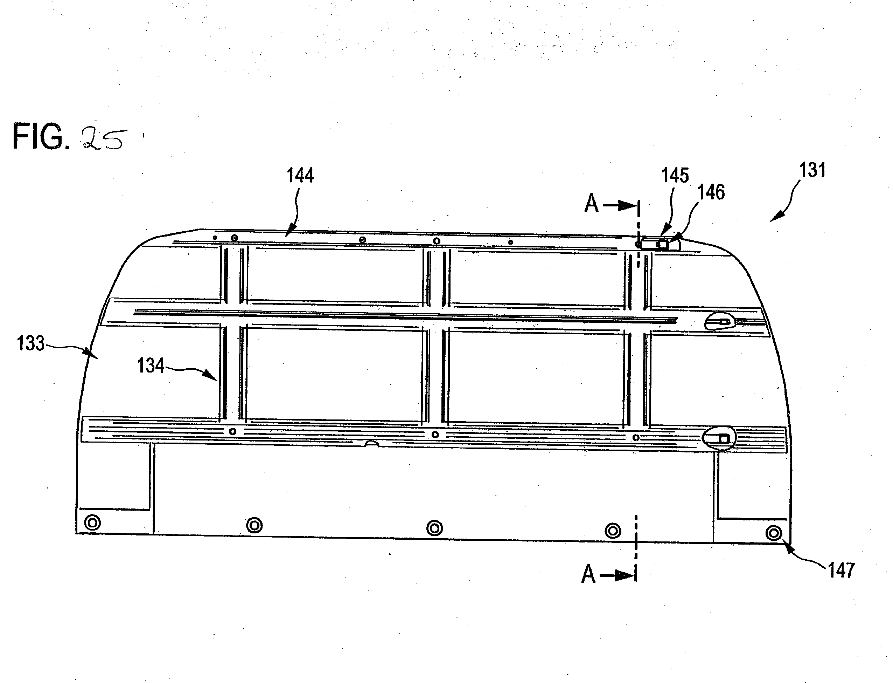

Figur 25 zeigt exemplarisch eine Draufsicht auf die nach dem Einbau in den Tiertransporter von innen zu sehende Seite der Plane 131. Die Plane 131 weist vertikale Taschen 134 auf, in denen Blattfedern zum automatischen Aufrollen der Plane 131 angeordnet sind. Des Weiteren weist die Plane 131 horizontale Taschen 144 auf, in denen Verstärkungsstreben 145 mit Übersteckkappen 146 angeordnet sind. Die oberste Verstärkungsstrebe 145 ist bevorzugt an dem oberen Rand der hinteren oberen Öffnung des Tiertransporters, das heißt insbesondere am oberen Rand der Haube des Tiertransporters, befestigt, insbesondere vernietet oder verschraubt. Die Plane 131 weist des Weiteren an ihrem unteren Rand Ösen 147 auf, an denen beispielsweise die in Figur 21 gezeigten Schlaufen 35 befestigt werden können.

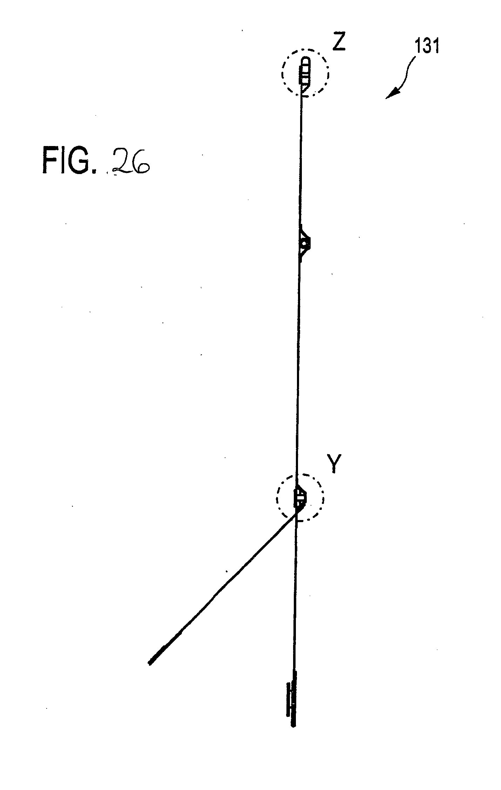

Figur 26 zeigt eine Schnittansicht entlang der Linie A-A in Figur 25. Die in Figur 26 mit Y und Z bezeichneten Bereiche sind in den Figur 26 und 14 vergrößert dargestellt.

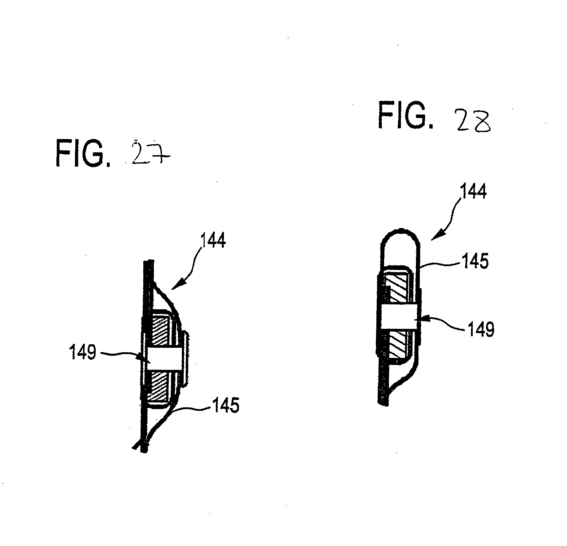

In Figur 26 ist zu erkennen, dass die untere Verstärkungstrebe 145 in der unteren horizontalen Tasche 144 angeordnet und mittels einer Niete 149, insbesondere einer Hohlniete, fixiert ist. In Figur 28 ist zu erkennen, dass auch die oberste Verstärkungsstrebe 145 mittels einer Niete 149, insbesondere einer Hohlniete, innerhalb der obersten horizontalen Tasche 144 fixiert ist.

In den unterschiedlichen horizontalen Taschen 144 können die gleichen oder unterschiedliche Verstärkungsstreben 145 angeordnet sein, die auf gleiche oder unterschiedliche Art und Weise, insbesondere mit gleichen oder unterschiedlichen Nieten, in der jeweiligen horizontalen Tasche 144 fixiert sein können. Beispielsweise sind die oberste und unterste Verstärkungsstreben bevorzugt Streben mit einem Rechteckprofil, während die dazwischenliegende Verstärkungsstrebe bevorzugt ein Rundprofil aufweist.

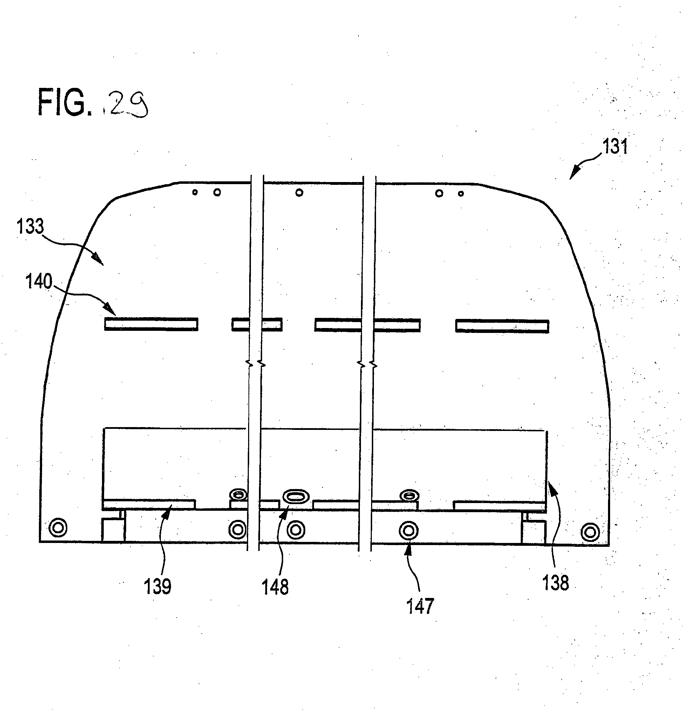

Figur 29 zeigt die Seite der Plane 131, die nach der Befestigung an dem Tiertransporter von außen zu sehen ist. In Figur 29 sind Haltemittel 139, die an der Abdeckplane 138 befestigt sind, und Haltemittel 140, die an der Plane 131 befestigt sind, zu erkennen. Diese Haltemittel 139, 140 sind bevorzugt Klettverschlüsse. Mittels dieser Haltemittel 139, 140 kann die Abdeckplane 138 in einem geöffneten Zustand an der Plane 131 gehalten werden.

Des Weiteren sind in der Figur 29 Ösen 148 zu erkennen, die an dem unteren Rand der Abdeckplane 138 angeordnet sind. Durch diese Ösen 148 können beispielsweise die in Figur 21 gezeigten und an den Ösen 147 der Plane 131 befestigbaren Schlaufen 35 hindurchgeführt werden, wenn die Abdeckplane 138 den luftundurchlässigen Netzbereich vollständig bedeckt, also nach unten geklappt ist, und die Plane 131 in dem vollständig nach unten gezogenen Zustand mittels der Schlaufen 35 gehalten wird.

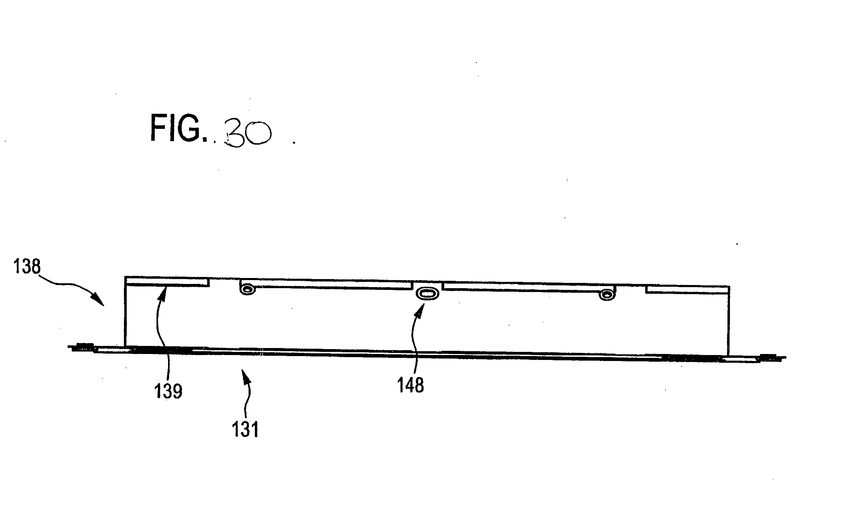

Figur 30 zeigt beispielhaft eine Draufsicht auf die Plane 131, in dem in Figur 24 gezeigten Zustand. Auch die Figuren 25 bis 29 zeigen die Plane 131 in dem in Figur 24 gezeigten Zustand.

In der in Figur 30 gezeigten Draufsicht ist die etwas nach vorne und nach oben geklappte Abdeckplane 138 mit den Haltemitteln 139 und den Ösen 148 zu erkennen.

Der undurchlässige Bereich der Plane ist bevorzugt aus PVC-Material hergestellt, wie es beispielsweise von der Firma Sioen Industries erhältlich ist. Hierbei handelt es sich bevorzugt um ein Material, welches klassischerweise für LKW-Planen eingesetzt wird.

Der luftdurchlässige Netzbereich wird bevorzugt durch eine offenporige Netzplane gebildet, die bevorzugt ein Produkt der Firma Huesker Synthetic GmbH. Dieses Material ist auch in dem DLG-Prüfbericht 4882 ausführlich beschrieben. Bevorzugt weist das Material wenigstens eine Offenporigkeit von etwa 30 % oder mehr auf, um eine hinreichende Durchlüftung zu erreichen.

Figur 4 zeigt einen Tiertransporter mit einer Trennwand 200, wobei eine Stange 201 der Trennwand 200 an einer Befestigungsstelle mit einem Bodenelement 202 verbunden ist.

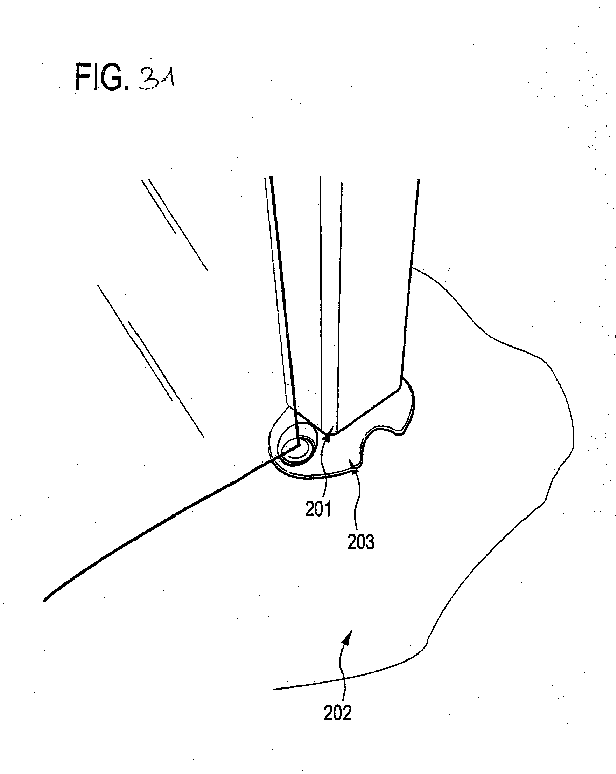

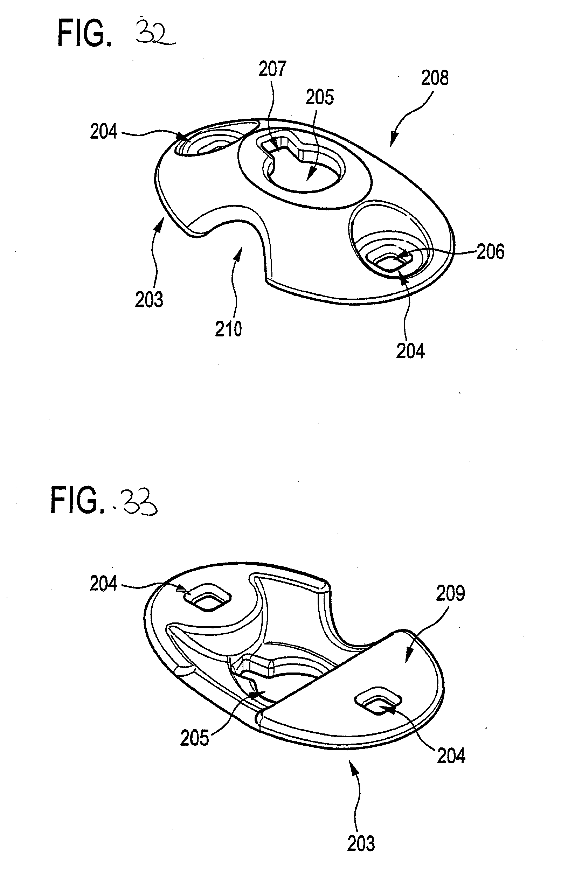

Figur 31 zeigt beispielhaft eine vergrößerte Ansicht einer Stange 201 einer Trennwand, die mit dem Bodenelement 202, das heißt einer Bodenplatte, mittels eines Befestigungselements 203 verbunden ist. Das Befestigungselement 203 ist ein Element zum Befestigen einer Stange 201 einer Trennwand an einem Bodenelement 202 eines Tiertransporters. Das Befestigungselement 203 ist in einer Draufsicht und in einer Sicht von unten in den Figuren 32 und 33 beispielhaft dargestellt.

In diesen Figuren ist zu erkennen, dass das Befestigungselement 203 einen Bodenverbindungsbereich 204 zum Verbinden des Befestigungselements 203 mit dem Bodenelement und einen Stangenverbindungsbereich 205 zum Verbinden des Befestigungselements 203 mit der Stange aufweist. Der Bodenverbindungsbereich 204 umfasst mindestens zwei Verbindungsöffnungen 206 zum Durchführen von Verbindungsmitteln zum Verbinden des Befestigungselements 203 mit dem Bodenelement. Diese Verbindungsöffnungen 206 dienen dazu, das Befestigungselement 203 insbesondere mittels Schrauben oder anderen durchführbaren Haltemitteln an dem Bodenelement zu befestigen.

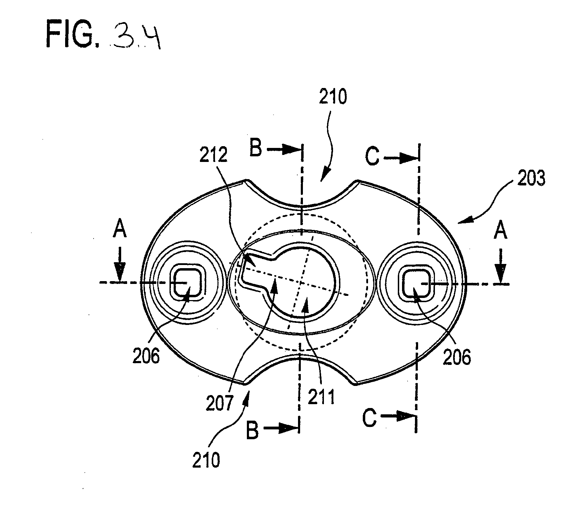

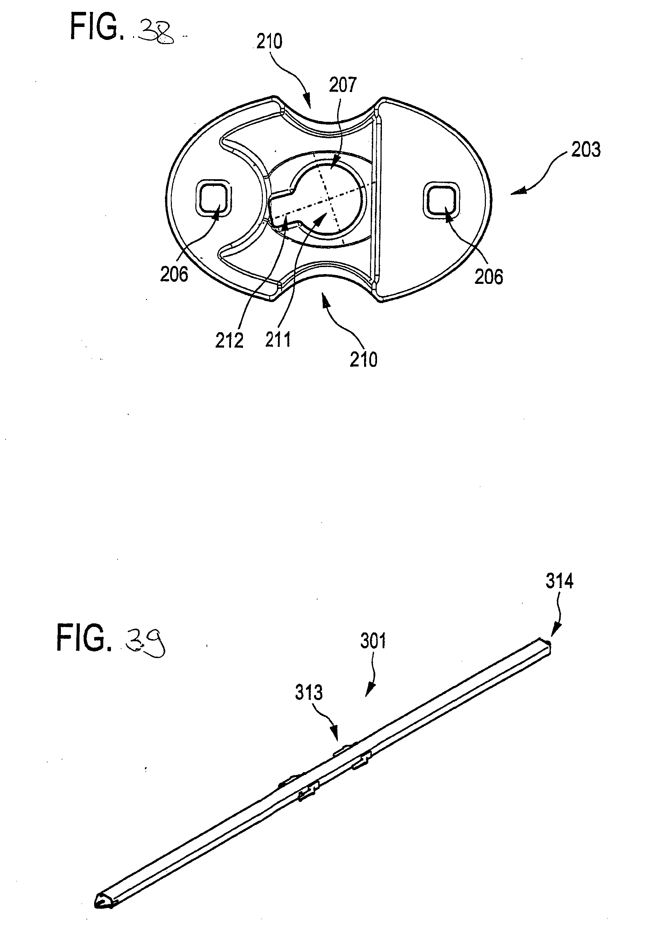

Der Stangenverbindungsbereich 205 weist eine Verriegelungsöffnung 207 zum Aufnehmen eines Verriegelungselements der Stange zum Herstellen einer Verriegelungsverbindung auf. Die Verriegelungsöffnung 207 weist einen kreisrunden Bereich 212 und einen sich an den kreisrunden Bereich 211 anschließenden im Wesentlichen rechtwinkligen Bereich 212 auf, wobei eine Linie von der Mitte des kreisrunden Bereichs 211 zu der Mitte des rechtwinkligen Bereichs 212 einen Winkel ungleich Null mit einer die beiden Verbindungsöffnungen 206 verbindenden Linie einschließt. Der kreisrunde Bereich 211 und der rechtwinklige Bereich 212 sind insbesondere in den unten näher erläuterten Figuren 34 und 38 dargestellt.

In Figur 32 ist im Wesentlichen die Seite des Befestigungselements 203 gezeigt, die im am Bodenelement befestigten Zustand im Wesentlichen der Stange zugewandt ist. Diese Stangenseite 208 ist abgerundet.

Das Befestigungselement 203 ist so ausgebildet, dass es in dem mit dem Bodenelement verbundenen Zustand mit dem Bodenelement einen Hohlraum bildet, in den das Verriegelungselement durch die Verriegelungsöffnung 207 hindurch zum Befestigen der Stange einführbar ist. Das Befestigungselement 203 weist seitliche Reinigungsöffnungen 210 auf, die ein Reinigen des Hohlraums ermöglichen. Zudem führen die Reinigungsöffnungen 210 zu Material- und Kostenersparnis.

In Figur 33 ist eine Draufsicht auf die Bodenseite 209 des Befestigungselements 203 gezeigt, die im befestigten Zustand an dem Bodenelement anliegt.

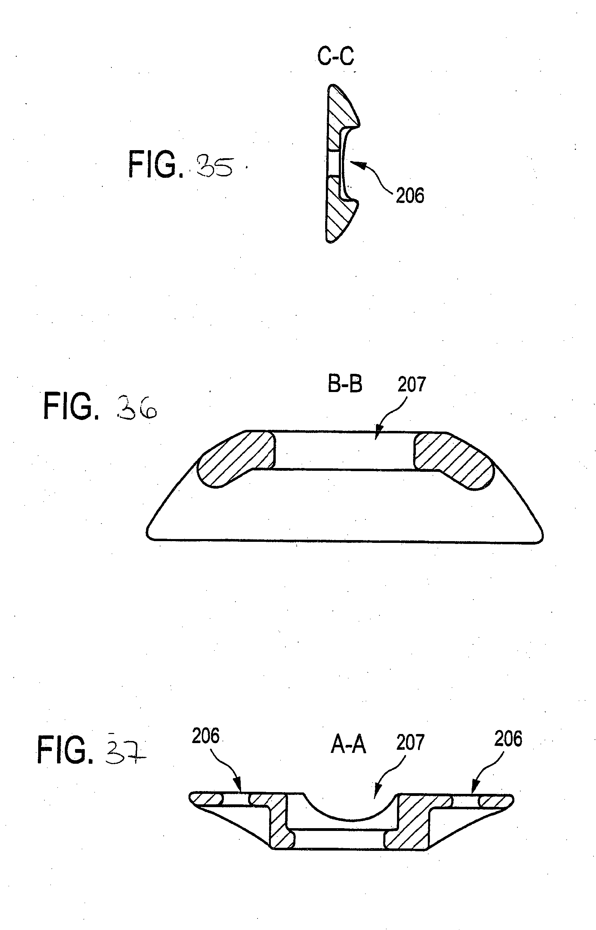

Figur 34 zeigt beispielhaft eine Draufsicht auf die Stangenseite des Befestigungselements 203 und die Figuren 35 bis 37 zeigen Schnittdarstellungen entlang der in Figur 34 gezeigten Linien C-C, B-B bzw. A-A. Figur 38 zeigt eine Draufsicht auf die Bodenseite 219 des Befestigungselements 203.

Figur 39 zeigt beispielhaft eine Perspektivansicht einer Stange 301, insbesondere einer Trennwand, die mit einem Bodenelement eines Tiertransporters mittels eines Befestigungselements verbindbar ist. Die Stange 301 weist Bolzen 313, in dieser Ausführungsform vier Bolzen 313, auf. Mittels der Bolzen können beispielsweise Querstreben einer Trennwand oder Boxenstangen mit der Stange 301 verbunden werden. Mit 314 ist in Figur 39 die im eingebauten Zustand dem Bodenelement zugewandte Seite bezeichnet.

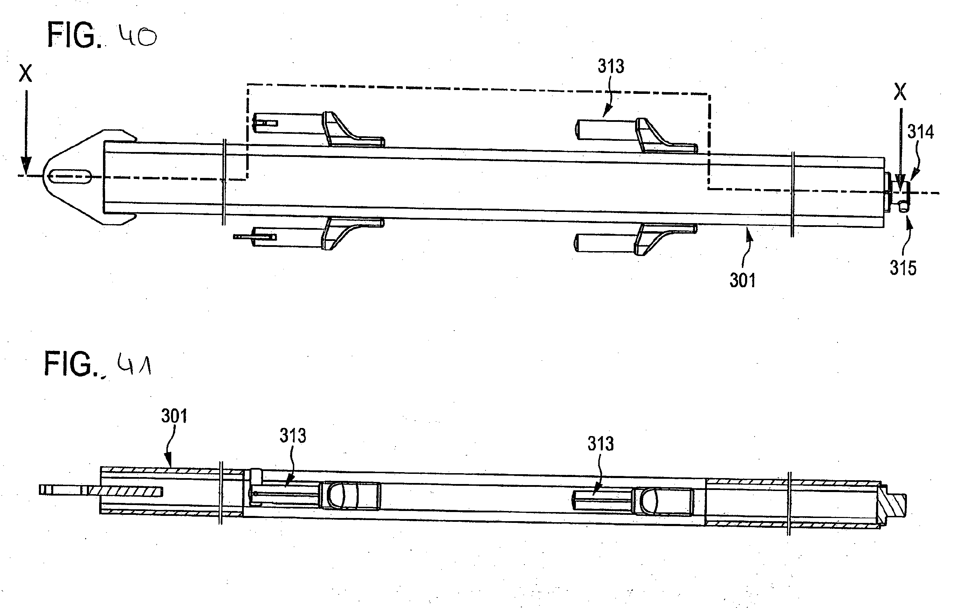

Figur 40 zeigt eine weitere Ansicht der Stange 301. Die Stange 301 ist ein Rohr, das an seiner im eingebauten Zustand dem Bodenelement zugewandten Seite 314 ein Verriegelungselement 315 mit einem Sicherungszapfen aufweist. Figur 41 zeigt eine Ansicht der Stange 301 entlang der in Figur 40 mit X-X bezeichneten Linie.

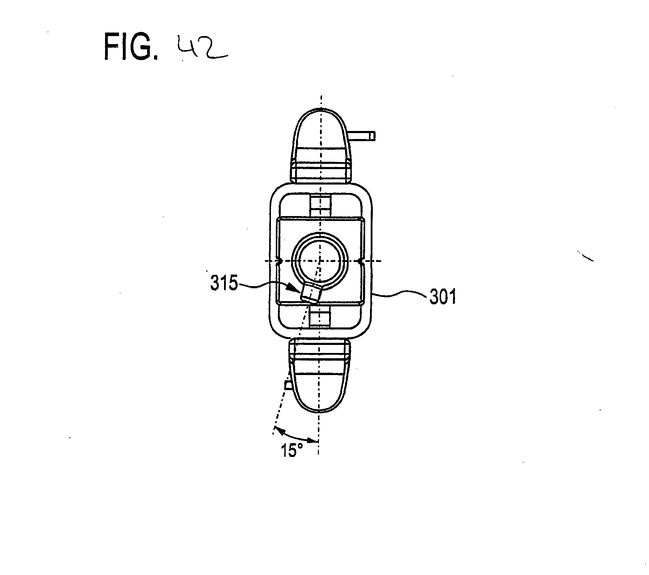

Figur 42 zeigt eine Draufsicht auf die im eingebauten Zustand dem Bodenelement zugewandte Seite 314 der Stange 301. Der Sicherungszapfen des Verriegelungselements 315 schließt mit einer Querlinie, die zwei auf gleicher Höhe angeordnete Bolzen verbindet, einen Winkel ungleich Null ein. Dieser Winkel trägt bevorzugt 15 Grad.

Das Verriegelungselement 315 mit dem Sicherungszapfen kann mit der Verriegelungsöffnung 207 des Befestigungselements 203 zusammenwirken, um die Stange 301 an dem Bodenelement mittels des Befestigungselements 203 leicht zu befestigen und ebenso durch Entriegeln wieder leicht zu lösen.

Das Befestigungselement kann verwendet werden, um Trennwände unterschiedlicher Art innerhalb eines Tiertransporters mit einem Bodenelement des Tiertransporters zu verbinden. Die Trennwand kann beispielsweise eine im Wesentlichen U-förmig gebogene Stange aufweisen, wobei die beiden Enden der im Wesentlichen U-förmig gebogenen Stange mit dem Bodenelement verbunden werden. Bevorzugt wird mindestens eines dieser Enden mittels des Befestigungselements mit dem Bodenelement verbunden. Eines dieser Enden weist daher bevorzugt ein Verriegelungselement auf, das mit einer Verriegelungsöffnung des Befestigungselements, das an dem Bodenelement befestigt ist, zusammenwirkt, um die Stange der Trennwand und damit die Trennwand mit dem Befestigungselement zu verriegeln, so dass die Trennwand an dem Bodenelement befestigt wird.

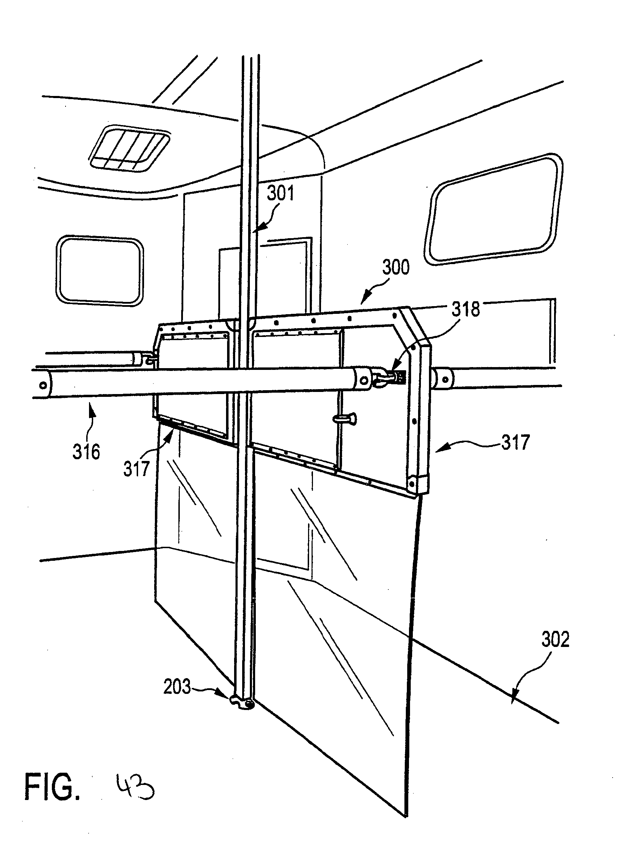

Eine Art einer Trennwand, die erfindungsgemäß mittels eines Befestigungselements mit einem Bodenelement eines Tiertransporters verbunden werden kann, ist beispielhaft in Figur 43 gezeigt.

Figur 43 zeigt den Innenraum eines Tiertransporters, insbesondere eines Pferdeanhängers, mit einer Trennwand 300. Die Trennwand 300 weist eine mittlere Stange 301 auf, die mittels des Befestigungselements 203 an dem Bodenelement 302 befestigt ist. Trennwandelemente 317 sind mittels der Bolzen 313 an die Stange 301 angehängt. Die Trennwandelemente 317 weisen des Weiteren Ringelemente 318 auf, mit denen die Trennwandelemente 317 beispielsweise mittels Boxenstangen 316 mit Seitenwänden des Tiertransporters verbunden werden können. In diesem Ausführungsbeispiel sind zwei Trennwandelemente 317 mittels der Bolzen 313 an der mittleren Stange 301 und zudem mittels je zwei Boxenstangen 316 mit den Seitenwänden des Tiertransporters verbunden. Die Mittelstange 301 erstreckt sich von dem Bodenelement 302 bis zu der Ecke des Tiertransporters, an der die Stange 301 ebenfalls befestigt ist, bevorzugt verschraubt ist.

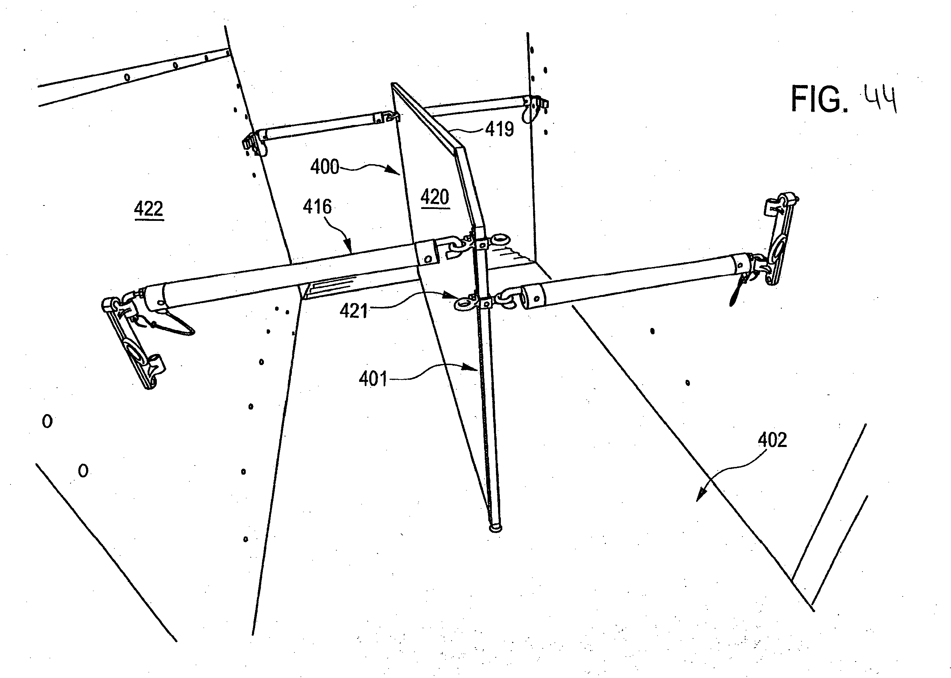

Eine weitere Trennwand, die erfindungsgemäß mittels eines Befestigungsmittels an einem Bodenelement befestigt werden kann, ist beispielhaft in Figur 44 gezeigt. Die Trennwand 400 weist einen durch Stangen gebildeten Rahmen 419 auf, der eine Trennplatte 420 aus beispielsweise Kunststoff oder Holz umschließt. Die Trennwand 400 ist mittels einer Stange 401 und eines erfindungsgemäßen Befestigungselements mit dem Bodenelement 402 des Tiertransporters verbunden. Die Trennwand 400 weist des Weiteren Ringelemente 421 auf, die insbesondere an dem Rahmen 419 der Trennwand 400 befestigt sind und in die entsprechende Vorstehungen von Boxenstangen 416 eingreifen können, um die Trennwand 400 mittels der Boxenstangen 416 mit den Seitenwänden 422 des Tiertransporters zu verbinden. Bevorzugt sind die Ringelemente 421 und die Boxenstangen 416 so angeordnet, dass sowohl ein vorderes Ende der Trennwand 400 als auch ein hinteres Ende der Trennwand 400 jeweils mit beiden Seitenwänden 422 verbunden sind.

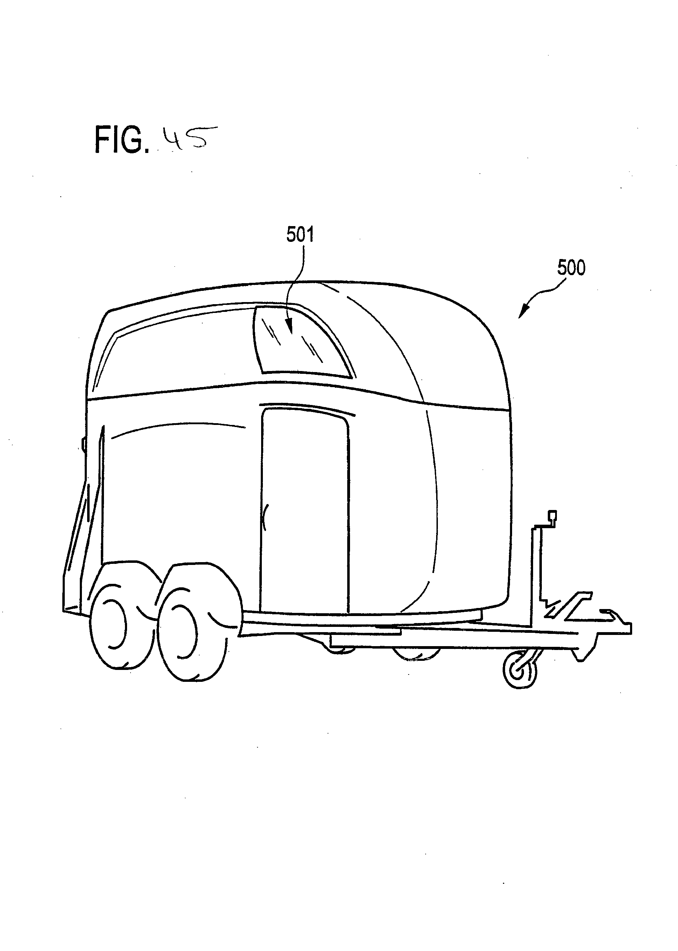

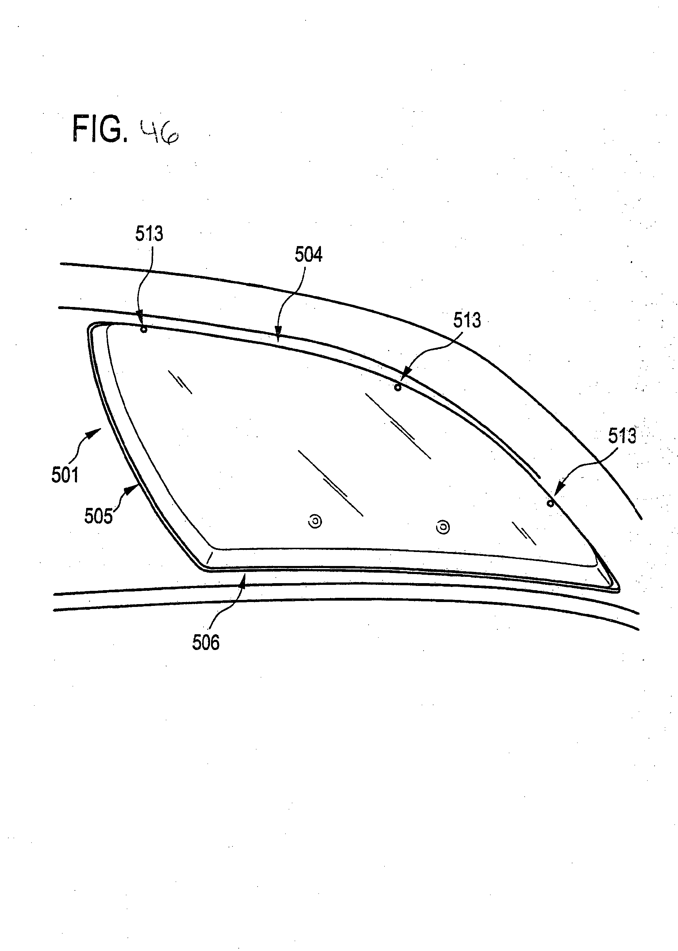

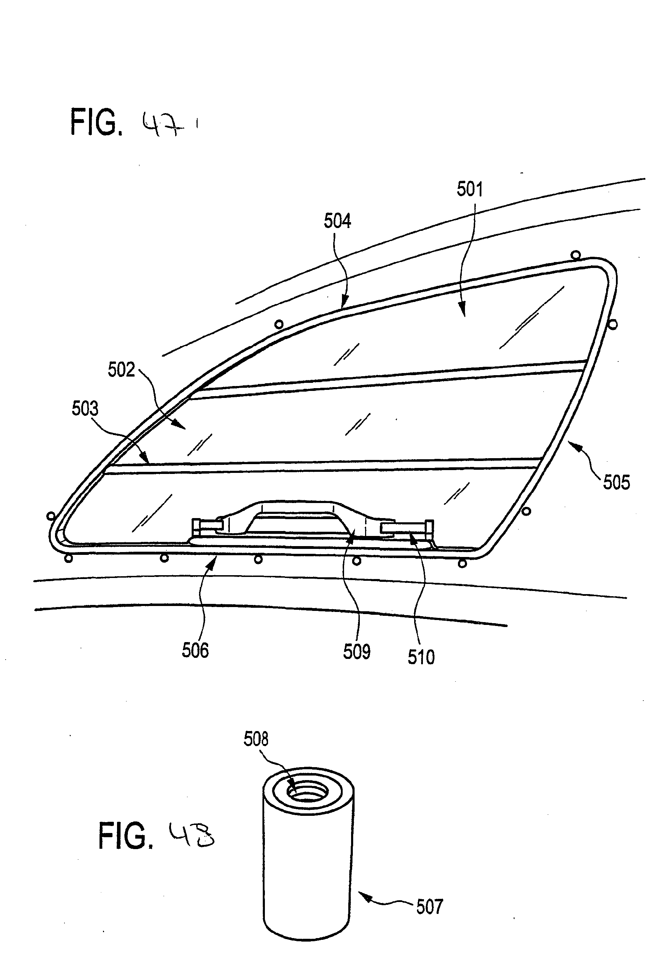

Figur 45 zeigt beispielhaft einen Tiertransporter 500 mit einem Ausstellfenster 501. Eine vergrößerte Außenansicht des Ausstellfensters 501 ist beispielhaft in Figur 46 gezeigt. Zudem ist eine Innenansicht des Ausstellfensters 501 beispielhaft in Figur 47 gezeigt.

Das Ausstellfenster 501 deckt eine vordere seitliche Öffnung 502 des Tiertransporters 500 ab. Die Öffnung 502 weist eine gebogene vordere erste Seite 504 auf, die der Fahrtrichtung zugewandt ist, eine zweite Seite 505, die der Fahrtrichtung abgewandt ist, und eine untere dritte Seite 506, die die Öffnung 502 nach unten begrenzt. Das Ausstellfenster 501 weist entsprechende Seiten auf, die den jeweiligen Seiten der Öffnung 502 im geschlossenen Zustand zugewandt sind. Die erste Seite 504 erstreckt sich von einer vorderen Ecke der Öffnung 502 nach oben und nach hinten zur einer hinteren oberen Ecke der Öffnung 502. Diese gesamte Seite 504 wird als der Fahrtrichtung zugewandte Seite betrachtet. Die zweite Seite 505 verläuft mit einem leichten Außenbogen von der hinteren oberen Ecke zu einer hinteren unteren Ecke und die Seite 506 verläuft im Wesentlichen horizontal von der hinteren unteren Ecke bis zur vorderen unteren Ecke. Die Öffnung 502 und damit das entsprechende Ausstellfenster 501 haben also die Form eines verzerrten Dreiecks. In anderen Ausführungsformen können das Ausstellfenster und die entsprechende Öffnung auch mindestens eine weitere Seite und beispielsweise die Form eines Vierecks aufweisen.

Die Öffnung 502 ist von horizontalen Streben 503 durchsetzt, um in diesem Bereich den Tiertransporter zu stabilisieren.

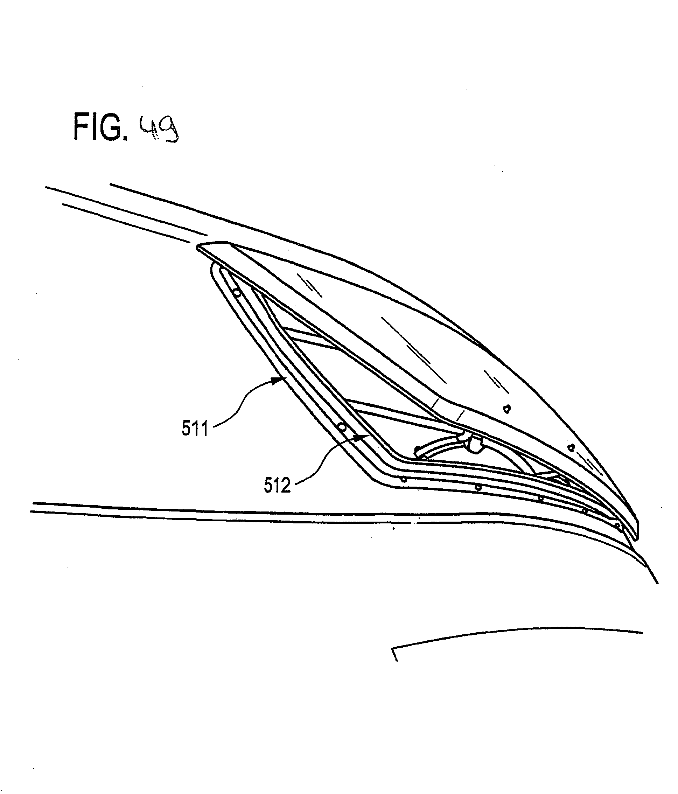

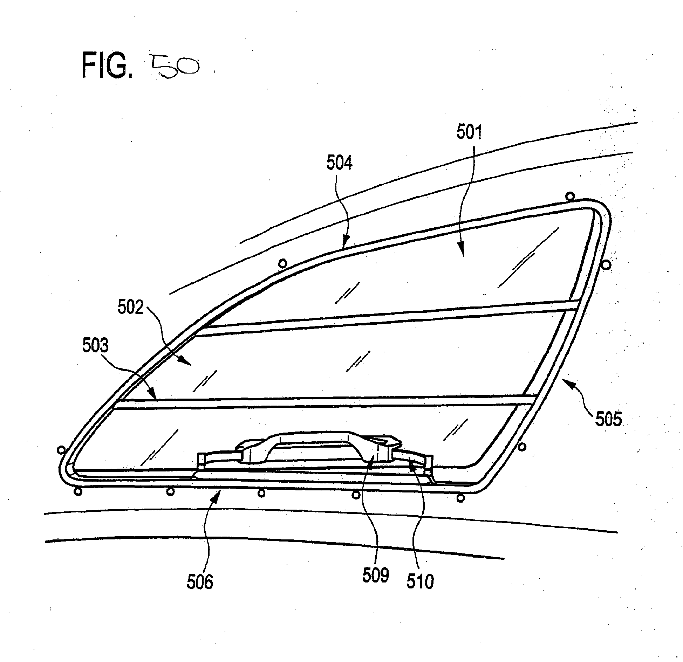

Figur 49 zeigt beispielhaft die Öffnung 502 mit dem Ausstellfenster 501 in einem geöffneten Zustand in einer Außenansicht und Figur 50 zeigt beispielhaft die Öffnung 502 mit dem Ausstellfenster 501 in einer Innenansicht.

In Figur 49 ist zu erkennen, dass der Rand der Öffnung 502 mit einem Fensterrahmen 511 versehen ist. Der Fensterrahmen 511 kann mit dem Rand der Öffnung 502 beispielsweise vernietet, verschraubt oder verklebt sein. Des Weiteren ist in Figur 49 zu erkennen, dass der Fensterrahmen 511 ein Isoliergummi 512 aufweist, der entlang des Fensterrahmens verläuft.

Die der ersten Seite 504 der Öffnung 502 zugewandte Seite des Ausstellfensters 501 ist mit der entsprechenden Seite des Fensterahmens 511 mittels zylinderförmiger Gummielemente verbunden. Eines dieser Gummielemente 507 ist beispielhaft in Figur 48 dargestellt. Das Gummielement ist zylinderförmig ausgebildet, wobei an gegenüberliegenden Enden des Gummielements 507 Schraubelemente 508 zum Verschrauben des Gummielements mit dem Fensterrahmen 511 und dem Ausstellfenster 501 vorhanden sind. Das heißt, zum Verbinden der Seite des Fensterrahmens 511, die der ersten Seite der Öffnung 502 zugewandt ist, werden mehrere Gummielemente 507 entlang dieser Seite des Fensterrahmens 511 verschraubt. Zudem wird das jeweils gegenüberliegende Ende des Gummielements 507 mit der entsprechenden Seite des Ausstellfensters 501 verschraubt. In dieser Ausführungsform erfolgt diese Verschraubung zumindest an den drei Verbindungsstellen 513, die in Figur 46 dargestellt sind.

Ein Griff 509 ist im Wesentlichen mittig an der unteren Seite des Ausstellfensters 501 befestigt. Der Griff 509 kann mit dem Ausstellfenster 501 beispielsweise verschraubt oder verklebt sein.

Der Griff 509 ist mittels einer Blattfeder 510 mit der Öffnung 502, insbesondere mit der dritten Seite 506 der Öffnung 502, verbunden. Bevorzugt ist die Blattfeder 510 gelenkig mit der Öffnung 502 verbunden. Die Blattfeder 501 kann eine durchgehende Blattfeder sein, die durch den Griff geführt ist, oder Zweiblattfedern 510 können vorhanden sein, die jeweils ein Ende des Griffes 509 mit der Öffnung 502 verbinden.

Die Blattfeder 510 ist so ausgebildet, dass sie in dem in den Figuren 46 und 47 gezeigten geschlossenen Zustand das Ausstellfensters 501 in dem geschlossenen Zustand hält, wobei zur Öffnung des Ausstellfensters 501 gegen einen Federwiderstand mittels des Griffs 509 von innen gegen das Ausstellfenster 501 gedrückt wird, bis ein Totpunkt der Blattfeder 510 überschritten ist und die Federkraft der Blattfeder 510 das Ausstellfenster 501 öffnet und in dem insbesondere in den Figuren 49 und 50 gezeigten geöffneten Zustand hält.

Obwohl in den oben genannten Ausführungsformen die Tiertransporter bestimmte Merkmale aufweisen, können diese Tiertransporter auch mehr oder weniger erfindungsgemäße Merkmale aufweisen. Insbesondere kann ein Tiertransporter sämtliche, insbesondere in den Ansprüchen, offenbarte Merkmale aufweisen. Merkmale, die in den oben genannten Ausführungsformen als zu unterschiedlichen Tiertransportern zugehörig beschrieben worden sind, können auch in einem einzigen Tiertransporter realisiert sein.

Die Erfindung bezieht sich auf eine Halterung einer an einem Ende eingehängten Boxenstange für einen Tiertransporter, insbesondere einen Pferdetransporter, mit einer Führung für ein anderes Ende der Boxenstange, wobei die Führung so ausgebildet ist, dass das andere Ende in die Führung eingreifen kann, wobei die Führung einen Anfangsbereich zum Aufnehmen des anderen Endes mit einem Endbereich zum Arretieren des anderen Endes verbindet, wobei zwischen dem Eingangsbereich und dem Endbereich ein Anschlag zum Verhindern eines ungewollten Herauslösens des anderen Endes aus dem Endbereich ausgebildet ist.

## Patentansprüche

1. Halterung (20) einer an einem Ende (45) eingehängten Boxenstange (40) für einen Tiertransporter, insbesondere einen Pferdetransporter, mit
einer Führung (21) des anderen Endes (41) der Boxenstange (40), deren anderes Ende in die Führung eingreift, welche
einen Anfangsbereich (30) zum Aufnehmen des anderen Endes (41) mit einem Endbereich (25) zum Arretieren des anderen Endes (41) verbindet, **dadurch gekennzeichnet, dass**
zwischen dem Anfangsbereich (30) und dem Endbereich (25) die Führung einen Anschlag (24) zum Verhindern eines ungewollten Herauslösens des anderen Endes (41) aus dem Endbereich (25) bildet.

2. Halterung (20) nach Anspruch 1, mit
einer Mehrzahl von den Führungen (21), bevorzugt mit drei Führungen (21, 22, 23), die nebeneinander in einer ersten Ebene (26) angeordnet sind.

3. Halterung (20) nach Anspruch 1 oder 2, wobei die wenigstens eine Führung (21) zumindest teilweise bogenförmig ausgebildet ist.

4. Halterung (20) nach einem der vorherigen Ansprüche, mit
einer ersten Ebene (26), in der die wenigstens eine Führung angeordnet ist und mit
einer zweiten Ebene (27), in der Befestigungsmittel zum Befestigen der Halterung (20) angeordnet sind, wobei die erste Ebene (26) und die zweite Ebene (27) parallel und voneinander beabstandet sind.

5. Boxenstange (40) zur Verwendung in einem Tiertransporter, insbesondere Pferdetransporter, mit
einem Ende (45) zum Einhängen an einem Tiertransporter und mit
einem anderen Ende (41) zum Einführen in eine Führung (21, 22, 23) einer Halterung (20) gemäß einem der vorherigen Ansprüche.

6. Boxenstange (40) nach Anspruch 5, wobei
das andere Ende (41) ausgebildet ist, Bewegungen des anderen Endes (41) entlang der Führung (21) zu erlauben und Bewegungen des anderen Endes in Längsrichtung der Boxenstange (40) zu verhindern.

7. Halterungssystem (60, 20) für eine Boxenstange (40) zur Verwendung in einem Tiertransporter, insbesondere in einem Pferdetransporter, mit
einer Halterung (20) gemäß einem der Ansprüche 1 bis 4 und mit
einer zweiten Halterung (60) zum Aufnehmen des einen Endes (45) der Boxenstange (40), wobei das Halterungssystem (60, 20) geeignet ist, ein Lösen des einen Endes (45) der Boxenstange (40) von der zweiten Halterung (60) nur bei einem gelösten anderen Ende (41) zu ermöglichen.

8. Halterungssystem mit einer Halterung (101; 102) für eine Boxenstange (105; 106) eines Tiertransporters (100) nach einem der Ansprüche 1 bis 4 und mit mindestens einem Befestigungsmittel zum Befestigen der Halterung (101, 102) an einer ersten Fläche (103) einer Wand (104) des Tiertransporters (100), wobei das Halterungssystem so angepasst ist, dass, wenn die Halterung (101; 102) an der ersten Fläche (103) der Wand (104) befestigt ist, durch Betätigen des Befestigungsmittels an einer zweiten Fläche (107) der Wand (104), die der ersten Fläche (103) gegenüberliegt, die Halterung (101; 102) von der ersten Fläche (103) der Wand (104) zumindest teilweise gelöst werden kann.

9. Halterungssystem nach Anspruch 8, **dadurch gekennzeichnet, dass** das mindestens eine Befestigungsmittel eine Ringschraube (116; 117) aufweist.

10. Halterungssystem nach Anspruch 8, **dadurch gekennzeichnet, dass** das Halterungssystern eine an der ersten Fläche (103) der Wand befestigbare Aufnahme (118; 119) zum Aufnehmen eines ersten Endes (120; 121) der Halterung (101; 102) als erstes Befestigungsmittel und ein zweites Befestigungsmittel zum Befestigen eines zweiten Endes (122; 123) der Halterung (101; 102) aufweist, wobei, wenn die Halterung (101; 102) an der ersten Fläche (103) der Wand (104) befestigt ist, das zweite Befestigungsmittel an der zweiten Fläche (107) lösbar ist, so dass die Halterung (101; 102) aus der Aufnahme (118; 119) entfernt werden kann, um die Halterung (101; 102) von der ersten Fläche (103) der Wand (104) zu lösen.

11. Halterungssystem nach Anspruch 10, **dadurch gekennzeichnet, dass** die Aufnahme (119) einen Anbindering (124) aufweist.

12. Halterungssystem nach einem der Ansprüche 8 bis 11, **dadurch gekennzeichnet, dass** das Halterungssystem eine zweite Halterung (110) zum Aufnehmen des einen Endes (111) der Boxenstange (105) aufweist, wobei das Halterungssystem geeignet ist, ein Lösen des einen Endes (111) der Boxenstange (105) von der zweiten Halterung (110) nur bei einem gelösten anderen Ende (112) zu ermöglichen.

13. Tiertransporter (70), insbesondere Pferdetransporter, mit einer Halterung (20) gemäß einem der Ansprüche 1 bis 4 oder mit einem Halterungssystem (60, 20) gemäß einem der Ansprüche 7 bis 12.

14. Tiertransporter (70), insbesondere Pferdetransporter, mit einer Halterung (20) gemäß einem der Ansprüche 2 bis 4, die an dem Tiertransporter (70) derart angeordnet ist, dass benachbarte Endbereiche (25) von benachbarten Führungen unterschiedlich hoch angeordnet sind.

15. Tiertransporter (70), insbesondere Pferdetransporter, insbesondere nach einem der Ansprüche 13 oder 14, mit einer Boxenstange (40) gemäß Anspruch 5 oder 6.

## Claims

1. A mounting (20) of a box bar (40), hooked-in at one end (45), for an animal transporter, in particular a horse transporter, having
a guide (21) of the other end (41) of the box bar (40) whose other end engages the guide, which guide
connects an initial region (30) for receiving the other end (41) to an end region (25) for locking the other end (41) in position, **characterized in that**
between the initial region (30) and the end region (25), the guide forms a stop (24) for preventing an undesired release of the other end (41) from the end region (25)

2. A mounting (20) according to claim 1, having
a plurality of the guides (21), preferably having three guides (21, 22, 23), which are arranged side by side in a first plane (26).

3. A mounting (20) according to claim 1 or 2, wherein the at least one guide (21) is at least partially arcuate.

4. A mounting (20) according to any one of the previous claims, having
a first plane (26) in which the at least one guide is arranged and having a second plane (27) in which there are arranged securing means for securing the mounting (20), wherein the first plane (26) and the second plane (27) are parallel and spaced apart from one another.

5. A box bar (40) for use in an animal transporter, in particular a horse transporter, having one end (45) for hooking-in at an animal transporter and having another end (41) for insertion into a guide (21, 22, 23) of a mounting (20) according to any one of the previous claims.

6. A box bar (40) according to claim 5, wherein the other end (41) is designed to permit movements of the other end (41) along the guide (21) and to prevent movements of the other end in the longitudinal direction of the box bar (40).

7. A mounting system (60, 20) for a box bar (40) for use in an animal transporter, in particular in a horse transporter, having
a mounting (20) according to any one of claims 1 to 4 and having
a second mounting (60) for receiving the one end (45) of the box bar (40), wherein the mounting system (60, 20) is suitable for enabling a detachment of the one end (45) of the box bar (40) from the second mounting (60) only when the other end (41) is detached.

8. A mounting system having a mounting (101; 102) for a box bar (105; 106) of an animal transporter (100) according to any one of claims 1 to 4 and having at least one securing means for securing the mounting (101, 102) to a first surface (103) of a wall (104) of the animal transporter (100), wherein the mounting system is adapted such that when the mounting (101; 102) is secured to the first surface (103) of the wall (104), the mounting (101; 102) can be at least partially detached from the first surface (103) of the wall (104) through operation of the securing means at a second surface (107), facing the first surface (103), of the wall (104).

9. A mounting system according to claim 8, **characterized in that** the at least one securing means has an eyebolt (116; 117).

10. A mounting system according to claim 8, **characterized in that** the mounting system has as a first securing means a receiver (118; 119), securable to the first surface (103) of the wall, for receiving a first end (120; 121) of the mounting (101; 102) and has a second securing means for securing a second end (122; 123) of the mounting (101; 102), wherein when the mounting (101; 102) is secured to the first surface (103) of the wall (104), the second securing means is detachable at the second surface (107), so that the mounting (101; 102) can be removed from the receiver (118; 119) in order to detach the mounting (101; 102) from the first surface (103) of the wall (104).

11. A mounting system according to claim 10, **characterised in that** the receiver (119) has a tie ring (124).

12. A mounting system according to any one of claims 8 to 11, **characterized in that** the mounting system has a second mounting (110) for receiving the one end (111) of the box bar (105), wherein the mounting system is suitable for enabling a detachment of the one end (111) of the box bar (105) from the second mounting (110) only in the event of a detached other end (112).

13. An animal transporter (70), in particular a horse transporter, having a mounting (20) according to any one of claims 1 to 4 or having a mounting system (60, 20) according to any one of claims 7 to 12.

14. An animal transporter (70), in particular a horse transporter, having a mounting (20) according to any one of claims 2 to 4, which mounting is arranged on the animal transporter (70) in such a manner that neighboring end regions (25) of neighboring guides are arranged at different heights.

15. An animal transporter (70), in particular a horse transporter, in particular according to one of claims 13 and 14, having a box bar (40) according to claim 5 or 6.

## Revendications

1. Support (20) d'une barre de box (40) accrochée sur une extrémité (45) pour un transporteur d'animaux, en particulier un transporteur de chevaux, avec
un guidage (21) de l'autre extrémité (41) de la barre de box (40), dont l'autre extrémité s'engage dans le guidage, qui
relie une zone de commencement (30) pour la réception de l'autre extrémité (41) avec une zone d'extrémité (25) pour l'arrêt de l'autre extrémité (41), **caractérisé en ce que**
le guidage forme, entre la zone de commencement (30) et la zone d'extrémité (25), une butée (24) pour empêcher un détachement non souhaité de l'autre extrémité (41) hors de la zone d'extrémité (25).

2. Support (20) selon la revendication 1, avec
une pluralité de guidages (21), de préférence avec trois guidages (21, 22, 23) qui sont disposés les uns à côté des autres dans un premier plan (26).

3. Support (20) selon la revendication 1 ou 2, l'au moins un guidage (21) étant réalisé au moins en partie en arc.

4. Support (20) selon l'une quelconque des revendications précédentes, avec
un premier plan (26), dans lequel l'au moins un guidage est disposé et avec
un second plan (27), dans lequel des moyens de fixation sont agencés pour la fixation du support (20), le premier plan (26) et le second plan (27) étant parallèles et espacés l'un de l'autre.

5. Barre de box (40) pour l'utilisation dans un transporteur d'animaux, en particulier un transporteur de chevaux, avec
une extrémité (45) pour l'accrochage à un transporteur d'animaux et avec
une autre extrémité (41) pour l'introduction dans un guidage (21, 22, 23) d'un support (20) selon l'une quelconque des revendications précédentes.

6. Barre de box (40) selon la revendication 5,
l'autre extrémité (41) étant réalisée afin de permettre des déplacements de l'autre extrémité (41) le long du guidage (21) et d'empêcher des déplacements de l'autre extrémité dans le sens longitudinal de la barre de box (40).

7. Système de support (60, 20) pour une barre de box (40) pour l'utilisation dans un transporteur d'animaux, en particulier dans un transporteur de chevaux, avec
un support (20) selon l'une quelconque des revendications 1 à 4 et avec
un second support (60) pour la réception d'une extrémité (45) de la barre de box (40), le système de support (60, 20) étant approprié pour permettre un détachement d'une une extrémité (45) de la barre de box (40) du second support (60) seulement lorsqu'une autre extrémité (41) est détachée.

8. Système de support avec un support (101 ; 102) pour une barre de box (105 ; 106) d'un transporteur d'animaux (100) selon l'une quelconque des revendications 1 à 4 et avec au moins un moyen de fixation pour la fixation du support (101, 102) sur une première surface (103) d'une paroi (104) du transporteur d'animaux (100), le système de support étant adapté de sorte que, lorsque le support (101 ; 102) est fixé sur la première surface (103) de la paroi (104), le support (101 ; 102) puisse être détaché au moins en partie de la première surface (103) de la paroi (104), par actionnement du moyen de fixation sur une seconde surface (107) de la paroi (104) qui fait face à la première surface (103).

9. Système de support selon la revendication 8, **caractérisé en ce que** l'au moins un moyen de fixation présente une vis annulaire (116 ; 117).

10. Système de support selon la revendication 8, **caractérisé en ce que** le système de support présente un logement (118 ; 119) pouvant être fixé sur la première surface (103) de la paroi pour la réception d'une première extrémité (120 ; 121) du support (101 ; 102) comme premier moyen de fixation et un second moyen de fixation pour la fixation d'une seconde extrémité (122 ; 123) du support (101 ; 102), lorsque le support (101 ; 102) est fixé sur la première surface (103) de la paroi (104), le second moyen de fixation pouvant être détaché sur la seconde surface (107) de sorte que le support (101 ; 102) puisse être retiré du logement (118 ; 119) afin de détacher le support (101 ; 102) de la première surface (103) de la paroi (104).

11. Système de support selon la revendication 10, **caractérisé en ce que** le logement (119) présente un anneau de liaison (124).

12. Système de support selon l'une quelconque des revendications 8 à 11, **caractérisé en ce que** le système de support présente un second support (110) pour la réception d'une extrémité (111) de la barre de box (105), le système de support étant approprié pour permettre un détachement d'une extrémité (111) de la barre de box (105) du second support (110) seulement lorsqu'une autre extrémité (112) est détachée.

13. Transporteur d'animaux (70), en particulier transporteur de chevaux, avec un support (20) selon l'une quelconque des revendications 1 à 4 ou avec un système de support (60, 20) selon l'une quelconque des revendications 7 à 12.

14. Transporteur d'animaux (70), en particulier transporteur de chevaux, avec un support (20) selon l'une quelconque des revendications 2 à 4 qui est agencé sur le transporteur d'animaux (70) de telle manière que des zones d'extrémité (25) contiguës de guidages contigus soient disposées à différentes hauteurs.

15. Transporteur d'animaux (70), en particulier transporteur de chevaux, en particulier selon l'une quelconque des revendications 13 ou 14, avec une barre de box (40) selon la revendication 5 ou 6.
